# EUROPEAN PATENT SPECIFICATION

(11) **EP 2 849 511 B1**
(45) Date of publication and mention of the grant of the patent: **03.10.2018**
(21) Application number: 13787312.1
(22) Date of filing: 04.04.2013
(51) Int. Cl.: H04W 4/18, H04W 16/28, H04W 72/04

(54) **WIRELESS COMMUNICATIONS DEVICE, WIRELESS COMMUNICATIONS SYSTEM, WIRELESS COMMUNICATIONS METHOD, AND PROGRAM**
DRAHTLOSE KOMMUNIKATIONSVORRICHTUNG, DRAHTLOSES KOMMUNIKATIONSSYSTEM, DRAHTLOSES KOMMUNIKATIONSVERFAHREN UND PROGRAMM
DISPOSITIF DE COMMUNICATION SANS FIL, SYSTÈME DE COMMUNICATION SANS FIL, PROCÉDÉ DE COMMUNICATION SANS FIL, ET PROGRAMME ASSOCIÉ

(30) Priority: 10.05.2012 JP 2012108366
(43) Date of publication of application: 18.03.2015
(73) Proprietor: Olympus Corporation, Tokyo 192-8507 (JP)
(72) Inventor: YANAGIDATE Masaharu, Tokyo 192-8507 (JP)
(74) Representative: Gunzelmann, Rainer
(86) International application number: PCT/JP2013/060310
(87) International publication number: WO 2013/168494

(56) References cited:
- EP-A1- 2 082 680
- JP-A- 2006 501 768
- US-B1- 6 483 819

## Description

### TECHNICAL FIELD

The present invention relates to technology of selecting an access target from among a plurality of wireless communication devices present in the same space, using directivity of directional antennas, thereby performing space division multiple access communication.

Priority is claimed on Japanese Patent Application No. 2012-108366, filed May 10, 2012.

### BACKGROUND ART

As a system of performing space division multiple access, Patent Document 1 discloses an example where multiple beam antennas are used at an AP (access point) in a WLAN (wireless local area network), thereby implementing space division multiple access. Patent Document 1 discloses that the directivity of electric waves is reduced by multi-beam antennas mounted on an AP to perform wireless communication, thereby performing simultaneous communication from a single AP to a plurality of terminals.

Techniques related to changing between space-division and time-division access are described in the US 6,483,819 B1. Techniques related to varying an image resolution depending on a moving speed of the imaging device are described in the EP 2 082 680 A1.

### CITATION LIST

### [Patent Document]

[Patent Document 1] Patent No. 3880554

### DISCLOSURE OF INVENTION

### Problems to be Solved by the Invention

Recently, there is an increasing number of cases where a plurality of image data output devices (endoscopic devices or the like) and a plurality of image data display devices (monitors) are installed in a room in medical practice, such as an operating room. The positions of those image data output devices and image data display devices are variable. Additionally, in order to secure positional freedom of the above image data output devices and the image data display devices, there is an increasing number of cases where those devices are wirelessly connected.

As described above, by performing space divisional multiple access communication in environments where a plurality of image data output devices and image data display devices are installed, it is possible to simultaneously perform a plurality of image communication effectively using limited wireless channels, and therefore it is useful. However, a plurality of devices are used in narrow space in medical practice. For this reason, there is a considerable situation where a plurality of image data output devices are arranged in substantially the same direction viewed from the image data display device. In this case, effects of interference waves from image data output devices other than an access target make it difficult to reliably receive image data from the image data output device as the access target.

### Means for Solving the Problems

Regarding a wireless communication device according to one aspect of the present invention, according to claim 1,among a plurality of communication formats to be used to transmit data with a predetermined period, a communication format that requires equal to or greater than half the period to transmit data is defined as a normal format, and a communication format that requires smaller than the half the period to transmit data is defined as a time division format. A wireless communication device to be accessed for data communication is defined as a target device, and a wireless communication device different from the target device is defined as a non-target device.
The wireless communication device includes: a directional antenna configured to wirelessly receive data from the target device; a measuring unit configured to control a directional direction of the directional antenna to measure states of electric waves around the wireless communication device; and a changing unit configured to, in a case that a direction of the target device is indistinguishable from a direction of the non-target device as a result of measurement of the states of the electric waves, change a communication format of the wireless communication device from the normal format to the time division format.

Additionally, the wireless communication device may further include: a determining unit configured to determine, based on the result of measurement of the states of the electric waves, whether or not a direction of the target device is distinguishable from a direction of the non-target device; and a control unit configured to, in a case that the direction of the target device is indistinguishable from the direction of the non-target device, perform control to transmit, via the directional antenna to the target device and the non-target device, notice information to be used to set the communication format to be the time division format.

Further, regarding the wireless communication device, the control unit may be configured to further perform control to transmit, via the directional antenna to the target device, instruction information that indicates an instruction to initiate data communication.

Moreover, regarding the wireless communication device, a wireless communication device configured to set wireless access between wireless communication devices to perform data communication is defined as a setting device. The wireless communication device may further include a control unit configured to transmit, via the directional antenna to the setting device, measurement result information that indicates the result of measurement of the states of the electric waves, and in a case that the direction of the target device is indistinguishable from the direction of the non-target device, perform control to receive, via the directional antenna from the setting device, notice information to be used to set the communication format to be the time division format. The changing unit may be configured to, in a case that the notice information is received, change a communication format of the wireless communication device from the normal format to the time division format.

Additionally, regarding the wireless communication device, a wireless communication device configured to set wireless access between wireless communication devices to perform data communication is defined as a setting device. The wireless communication device may further include: a determining unit configured to determine, based on the result of measurement of the states of the electric waves, whether or not a direction of the target device is distinguishable from a direction of the non-target device; and a control unit configured to, in a case that the direction of the target device is indistinguishable from the direction of the non-target device, perform control to transmit, via the directional antenna to the setting device, interference occurrence information that indicates occurrence of interference, and receive, via the directional antenna from the setting device, notice information to be used to set the communication format to be the time division format. The changing unit may be configured to, in a case that the notice information is received, change a communication format of the wireless communication device from the normal format to the time division format.

Further, regarding the wireless communication device, the control unit may be configured to receive from the setting device, instruction information that indicates an instruction to initiate data communication, and perform control to initiate reception of data from the target device.

Moreover, the wireless communication device may further include a warning unit configured to perform warning in a case that the communication format is changed from the normal format to the time division format.

Additionally, regarding a wireless communication device according to another aspect of the present invention, among a plurality of communication formats to be used to transmit data with a predetermined period, a communication format that requires equal to or greater than half the period to transmit data is defined as a normal format, and a communication format that requires smaller than the half the period to transmit data is defined as a time division format. A wireless communication device to be accessed for data communication is defined as a target device, a wireless communication device different from the target device is defined as a non-target device, and a wireless communication device configured to set wireless access between wireless communication devices to perform data communication is defined as a setting device. Another wireless communication device includes: a directional antenna configured to wirelessly receive data from the target device; a measuring unit configured to control a directional direction of the directional antenna to measure states of electric waves around the wireless communication device; a control unit configured to transmit, via the directional antenna to the setting device, measurement result information that indicates a result of measurement of the states of the electric waves, and in a case that the direction of the target device is indistinguishable from the direction of the non-target device, perform control to receive, via the directional antenna from the setting device, notice information to be used to set the communication format to be the time division format; and a changing unit configured to, in a case that the notice information is received, change a communication format of the wireless communication device from the normal format to the time division format. The wireless communication device includes: a receiving unit configured to receive the measurement result information from the other wireless communication; a determining unit configured to, based on the measurement result information, whether or not a direction of the target device is distinguishable from a direction of the non-target device; and a transmitting unit configured to transmit the access information to the other wireless communication device, and in a case that the direction of the target device is indistinguishable from the direction of the non-target device, further transmit the notice information to the other wireless communication device.

Further, regarding a wireless communication device according to another aspect of the present invention, among a plurality of communication formats to be used to transmit data with a predetermined period, a communication format that requires equal to or greater than half the period to transmit data is defined as a normal format, and a communication format that requires smaller than the half the period to transmit data is defined as a time division format. A wireless communication device to be accessed for data communication is defined as a target device, a wireless communication device different from the target device is defined as a non-target device, and a wireless communication device configured to set wireless access between wireless communication devices to perform data communication is defined as a setting device. Another wireless communication device includes: a directional antenna configured to wirelessly receive data from the target device; a determining unit configured to determine, based on a result of measurement of the states of the electric waves, whether or not a direction of the target device is distinguishable from a direction of the non-target device; and a control unit configured to, in a case that the direction of the target device is indistinguishable from the direction of the non-target device, perform control to transmit, via the directional antenna to the setting device, interference occurrence information that indicates occurrence of interference, and receive, via the directional antenna from the setting device, notice information to be used to set the communication format to be the time division format; a changing unit configured to, in a case that the notice information is received, change a communication format of the wireless communication device from the normal format to the time division format. The wireless communication device includes: a receiving unit configured to receive the interference occurrence information from the other wireless communication device; and a transmitting unit configured to transmit the access information to the other wireless communication device, and in a case that the interference occurrence information indicates that interference occurs, transmit the notice information to the other wireless communication device.

Moreover, regarding the wireless communication device, the transmitting unit may be configured to further transmit to the other wireless communication device, instruction information that indicates an instruction to initiate data communication.

Additionally, regarding a wireless communication system according to another aspect of the present invention, according to claim 4, among a plurality of communication formats to be used to transmit data with a predetermined period, a communication format that requires equal to or greater than half the period to transmit data is defined as a normal format, and a communication format that requires smaller than the half the period to transmit data is defined as a time division format. A wireless communication device to be accessed for data communication is defined as a target device, and a wireless communication device different from the target device is defined as a non-target device. The wireless communication system includes: a first wireless communication device including a directional antenna configured to wirelessly receive data from the target device, a measuring unit configured to control a directional direction of the directional antenna to measure states of electric waves around the first wireless communication device, a determining unit configured to determine, based on a result of measurement of the states of the electric waves, whether or not a direction of the target device is distinguishable from a direction of the non-target device, and a control unit configured to, in a case that the direction of the target device is indistinguishable from the direction of the non-target device, perform control to transmit, via the directional antenna to the target device and the non-target device, notice information to be used to set the communication format to be the time division format; and a changing unit configured to, in a case that the direction of the target device is indistinguishable from the direction of the non-target device, change a communication format of the wireless communication device from the normal format to the time division format; a second wireless communication device that is the target device configured to, in a case that the notice information is received, change the communication format of the second wireless communication device from the normal format to the time division format; and a third wireless communication device that is the non-target device configured to, in a case that the notice information is received, change the communication format of the third wireless communication device from the normal format to the time division format.

Further, regarding a wireless communication system according to another aspect of the present invention, among a plurality of communication formats to be used to transmit data with a predetermined period, a communication format that requires equal to or greater than half the period to transmit data is defined as a normal format, and a communication format that requires smaller than the half the period to transmit data is defined as a time division format. A wireless communication device to be accessed for data communication is defined as a target device, a wireless communication device different from the target device is defined as a non-target device, and a wireless communication device configured to set wireless access between wireless communication devices to perform data communication is defined as a setting device. The wireless communication system includes: a first wireless communication device including a directional antenna configured to wirelessly receive data from the target device, a measuring unit configured to control a directional direction of the directional antenna to measure states of electric waves around the first wireless communication device, a control unit configured to transmit, via the directional antenna to the setting device, measurement result information that indicates a result of measurement of the states of the electric waves, and in a case that a direction of the target device is indistinguishable from a direction of the non-target device, perform control to receive, via the directional antenna from the setting device, notice information to be used to set the communication format to be the time division format, and a changing unit configured to, in a case that the notice information is received, change a communication format of the wireless communication device from the normal format to the time division format; a second wireless communication device that is the target device configured to, in a case that the notice information is received from the setting device, change a communication format of the second wireless communication device from the normal format to the time division format; a third wireless communication device that is the non-target device configured to, in a case that the notice information is received from the setting device, change a communication format of the third wireless communication device from the normal format to the time division format; and a fourth wireless communication device that is the setting device configured to transmit the access information to the first wireless communication device, the second wireless communication device, and the third wireless communication device, and in a case that the direction of the target device is indistinguishable from the direction of the non-target device, transmit the notice information to the first wireless communication device, the second wireless communication device, and the third wireless communication device.

Moreover, regarding a wireless communication system according to another aspect of the present invention, among a plurality of communication formats to be used to transmit data with a predetermined period, a communication format that requires equal to or greater than half the period to transmit data is defined as a normal format, and a communication format that requires smaller than the half the period to transmit data is defined as a time division format. A wireless communication device to be accessed for data communication is defined as a target device, a wireless communication device different from the target device is defined as a non-target device, and a wireless communication device configured to set wireless access between wireless communication devices to perform data communication is defined as a setting device. The wireless communication system includes: a first wireless communication device including a directional antenna configured to wirelessly receive data from the target device, a measuring unit configured to control a directional direction of the directional antenna to measure states of electric waves around the first wireless communication device, a determining unit configured to determine, based on a result of measurement of the states of the electric waves, whether or not a direction of the target device is distinguishable from a direction of the non-target device, and a control unit configured to, in a case that the direction of the target device is indistinguishable from the direction of the non-target device, perform control to transmit, via the directional antenna to the setting device, interference occurrence information that indicates occurrence of interference, and receive, via the directional antenna from the setting device, notice information to be used to set the communication format to be the time division format, and a changing unit configured to, in a case that the notice information is received, change a communication format of the wireless communication device from the normal format to the time division format; a second wireless communication device that is the target device configured to, in a case that the notice information is received from the setting device, change the communication format of the second wireless communication device from the normal format to the time division format; a third wireless communication device that is the non-target device configured to, in a case that the notice information is received, change the communication format of the third wireless communication device from the normal format to the time division format; and a fourth wireless communication device that is the setting device including a receiving unit configured to receive the interference occurrence information from the first wireless communication, and a transmitting unit configured to transmit the access information to the first wireless communication device, and in a case that the interference occurrence information indicates that interference occurs, transmit the notice information to the first wireless communication device, and the second wireless communication device, the third wireless communication device.

Additionally, regarding a wireless communication method according to another aspect of the present invention, according to claim 5, among a plurality of communication formats to be used to transmit data with a predetermined period, a communication format that requires equal to or greater than half the period to transmit data is defined as a normal format, and a communication format that requires smaller than the half the period to transmit data is defined as a time division format. A wireless communication device to be accessed for data communication is defined as a target device, and a wireless communication device different from the target device is defined as a non-target device. The wireless communication method includes steps to be performed by a wireless communication device including a directional antenna configured to wirelessly receive data from the target device. The steps include: a step of controlling a directional direction of the directional antenna, thereby measuring states of electric waves around the wireless communication device; and a step of, in a case that a direction of the target device is indistinguishable from a direction of the non-target device as a result of measurement of the states of the electric waves, changing a communication format of the wireless communication device from the normal format to the time division format.

Further, regarding a program according to another aspect of the present invention, according to claim 6, among a plurality of communication formats to be used to transmit data with a predetermined period, a communication format that requires equal to or greater than half the period to transmit data is defined as a normal format, and a communication format that requires smaller than the half the period to transmit data is defined as a time division format. A wireless communication device to be accessed for data communication is defined as a target device, and a wireless communication device different from the target device is defined as a non-target device. The program has a computer of a wireless communication device including a directional antenna configured to wirelessly receive data from the target device, execute: a step of controlling a directional direction of the directional antenna, thereby measuring states of electric waves around the wireless communication device; and a step of, in a case that a direction of the target device is indistinguishable from a direction of the non-target device as a result of measurement of the states of the electric waves, changing a communication format of the wireless communication device from the normal format to the time division format.

### Effects of the Invention

According to the embodiments of the present inventions, the communication format is changed from the normal format to the time division format in a case where the direction of a target device is not distinguishable from the direction of a non-target device.
Thereby, it is possible to adjust the communication timings so that data communication by the target device is not performed simultaneously with data communication by the non-target device, thus enabling reliable wireless communication.

### BRIEF DESCRIPTION OF THE DRAWINGS

FIG. 1 is a block diagram illustrating a configuration of an image communication system according to a first embodiment of the present invention.
FIG. 2 is a block diagram illustrating a configuration of a reception device included in the image communication system according to the first embodiment of the present invention.
FIG. 3 is a block diagram illustrating a configuration of a transmission device included in the image communication system according to the first embodiment of the present invention.
FIG. 4 is a flowchart illustrating procedure for processing of the reception device included in the image communication system according to the first embodiment of the present invention.
FIG. 5 is a flowchart illustrating procedure for processing of the reception device included in the image communication system according to the first embodiment of the present invention.
FIG. 6 is a flowchart illustrating procedure for processing of the transmission device included in the image communication system according to the first embodiment of the present invention.
FIG. 7 a flowchart illustrating procedure for processing of the transmission device included in the image communication system according to the first embodiment of the present invention.
FIG. 8 is a sequence chart illustrating procedure for processing of the transmission device and the reception device included in the image communication system according to the first embodiment of the present invention.
FIG. 9 is a sequence chart illustrating procedure for processing of the transmission device and the reception device included in the image communication system according to the first embodiment of the present invention.
FIG. 10 is a sequence chart illustrating procedure for processing of the transmission device and the reception device included in the image communication system according to the first embodiment of the present invention.
FIG. 11 is a sequence chart illustrating procedure for processing of the transmission device and the reception device included in the image communication system according to the first embodiment of the present invention.
FIG. 12 is a block diagram illustrating a configuration of a configuration of an image communication system according to a second embodiment of the present invention.
FIG. 13 is a block diagram illustrating a configuration of a remote control included in the image communication system according to the second embodiment of the present invention.
FIG. 14 is a block diagram illustrating procedure for processing of the remote control included in the image communication system according to the second embodiment of the present invention.
FIG. 15 is a flowchart illustrating procedure for processing of a reception device included in the image communication system according to the second embodiment of the present invention.
FIG. 16 is a referential diagram illustrating contents of a device arrangement table according to the second embodiment of the present invention.
FIG. 17 is a referential diagram illustrating a result of access setting according to the second embodiment of the present invention.
FIG. 18 is a referential diagram illustrating a result of access setting according to the second embodiment of the present invention.
FIG. 19 is a timing chart illustrating communication timings according to the second embodiment of the present invention.
FIG. 20 is a timing chart illustrating communication timings according to a third embodiment of the present invention.

### BEST MODE FOR CARRYING OUT THE INVENTION

Hereinafter, embodiments of the present invention will be described with reference to drawings.

### (First Amendment)

First, a first embodiment of the present invention is explained. Descriptions will be given in the present embodiment while taking as an example a case where the present invention is applied to an image communication system including three sets each including an image sensor device that captures an image, a transmission device that wirelessly transmits the captured image, and a reception that receives the wirelessly-transmitted image. Additionally, wireless communication is generally performed in three-dimensional space. To simplify descriptions, however, descriptions will be given with respect to a case where wireless communication is performed in two-dimensional space.

A transmission device and a reception device of the present embodiment perform wireless communication with a predetermined period, using the same frequency band. Wireless communication of the present embodiment is performed in format such that each transmission device periodically transmits image data corresponding to one screen, and there is a transmission break period, which is called a blank period, between image data corresponding to one screen and image data corresponding to the next one screen. In the present embodiment, a normal format and a time division formal are used as communication formats to be used for transmission of image data. The normal format is a communication format that requires at least a half (1/2) the length of the period to communicate the image data. The time division format is a communication format that requires less than half (1/2) the length of the period to communicate the image data. In a case where the time division format is used, image data is transmitted after the amount of the image data is reduced by, for example, compression or thinning.

In a case where wireless transmission of image data is performed between a transmission device (Ta) and a reception device (Ra), the reception device (Ra), upon detecting interference caused by electric waves transmitted from a transmission device (Tb) different from the transmission device (Ta) as an access target, has transmission of data from the transmission device (Ta) as the access target terminated. Subsequently, the reception device (Ra) notifies the transmission device (Tb) of a change of the communication format, in a blank period during wireless communication being performed by the transmission device (Tb) transmitting the electric waves causing the interference. The transmission device (Tb) receiving the notice changes the communication format from the normal format to the time division format and then performs transmission.

The transmission device (Ta) as the access target changes the communication format from the normal format to the time division format, and then waits for an instruction from the reception device (Ra) to initiate transmission. The reception device (Ra) monitors wireless communication performed by the transmission device (Tb) and notifies the transmission device (Ta) as the access target of the start timing of the blank period during that wireless communication. The transmission device (Ta) as the access target initiates wireless communication with reference to the start timing notified from the reception device (Ra). The transmission device (Ta) and the transmission device (Tb) perform wireless transmission of image data so that the transmission timings of the respective devices do not overlap each other.

### [System Configuration]

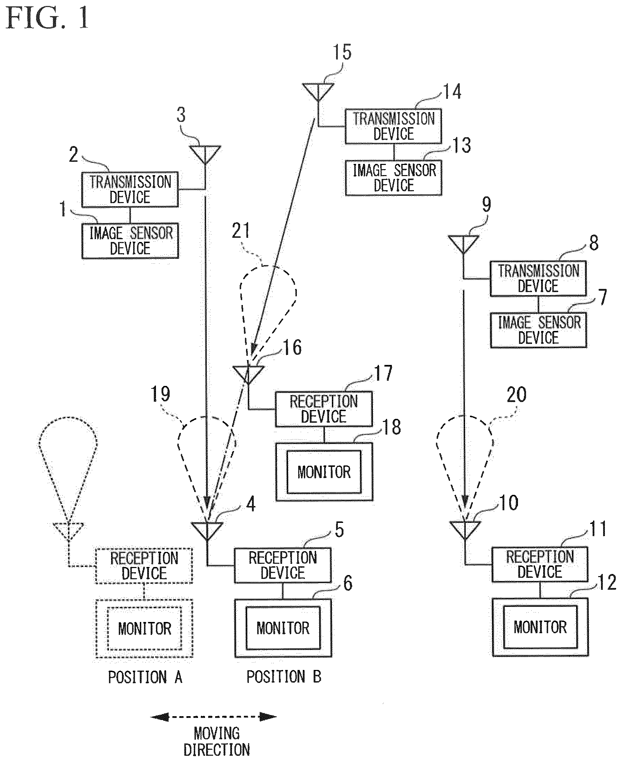

First, a summary of the image communication system is described with reference to FIG. 1. The image communication system shown in FIG. 1 includes three image sensor transmission units (an image sensor device 1/a transmission device 2, an image sensor device 7/a transmission device 8, and an image sensor device 13/a transmission device 14) and three reception display units (a reception device 5/a monitor 6, a reception device 11/a monitor 12, and a reception device 17/a monitor 18).

The image sensor transmission unit is one-to-one connected to the reception display unit. An access target for transmission and reception of data can be set as appropriately. In the present embodiment, the image sensor transmission unit including the image sensor device 1 and the transmission device 2 is connected to the reception display unit including the reception device 5 and the monitor 6. Additionally, the image sensor transmission unit including the image sensor device 7 and the transmission device 8 is connected to the reception display unit including the reception device 11 and the monitor 12. Further, the image sensor transmission unit including the image sensor device 13 and the transmission device 14 is connected to the reception display unit including the reception device 17 and the monitor 18.

In the image communication system of the present embodiment, the transmission device of each image sensor transmission unit wirelessly transmits image data, the reception device of the reception display unit to be an access target receives the image data, and the monitor displays an image based on the received image data. The transmission device and the reception device of the present embodiment use the same frequency band to perform wireless communication with a predetermined period. Additionally, the transmission device and the reception device are mounted with directional antennas, the directivity of which is variable, and directs the directional direction toward the access target, thereby suppressing irradiation of electric waves toward devices other than the access target. Thus, time division multiple access for performing a plurality of simultaneous wireless communication with the same frequency band in the same space is implemented. The transmission device 2 is mounted with an antenna 3. The transmission device 8 is mounted with an antenna 9. The transmission device 14 is mounted with an antenna 15. The transmission device 5 is mounted with an antenna 4. The transmission device 11 is mounted with an antenna 10. The transmission device 17 is mounted with an antenna 16.

In the present embodiment, descriptions will be given while taking as an example a case where each device is arranged such that the direction of the transmission device 2 as the access target viewed from the reception device 5 is substantially the same as the direction of the transmission device 14 not as the access target. An antenna of the present embodiment mounted on each of the transmission device and the reception device is a variable directivity antenna including a plurality of antenna elements, and the directivity is controlled by phase control with respect to each antenna element. The details of the operational principle with respect to the directivity control of the variable directivity antenna are known, and therefore a description thereof is omitted here.

In the image communication system of the present embodiment, in a case where each device is arranged as shown in FIG. 1, a communication format of wireless communication to be performed by the transmission device 2 and a communication format of wireless communication to be performed by the reception device 14 are changed to a time division format associated with time division communication, thereby preventing a transmission time of each transmission device from overlapping each other and therefore preventing interference with the reception device 5.

### [Detailed Description]

Directional pattern (directional angle) of the antennas of the respective reception devices are indicated by directional patterns 19, 20, and 21 shown in FIG 1. As illustrated, each directional angle is set to be a predetermined angle (approximately several ten degree). In a case where each device is arranged as shown in FIG. 1, the directions of the transmission devices 2 and 14 are included in the range of the directional angle indicated by the directional pattern 19 of the antenna 4 mounted on the reception device 5. For this reason, if the transmission devices 2 and 14 simultaneously perform wireless transmission, interference with the reception device 5 occurs. Here, the wireless communication between the transmission device 8 and the reception device 11 does not affect other communication, and thus wireless communication in normal format is performed.

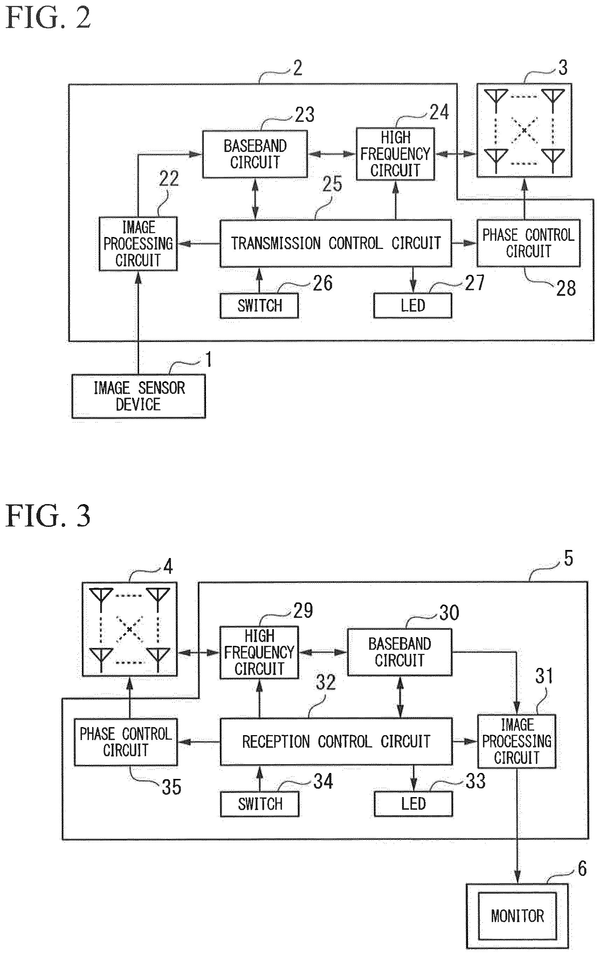

FIG. 2 illustrates a configuration of the transmission device 2. The transmission devices 8 and 14 have similar configurations to that of the transmission device 2. For this reason, the configuration of the transmission device 2 will be described representatively. As shown in FIG. 2, the transmission device 2 includes antennas 3, an image processing circuit 22, a baseband circuit 23, a high frequency circuit 24, a transmission control circuit 25, an operation switch 26, an LED 27, and a phase control circuit 28.

The image processing circuit 22 receives an image signal output from the image sensor device 1, performs image processing on the image signal, and outputs image data. The baseband circuit 23 performs baseband processing on the image data received from the image processing circuit 22. The high frequency circuit 24 performs high frequency processing on the signal received from the baseband circuit 23. The transmission control circuit 25 controls the entire processing of the transmission device 2. Additionally, the transmission control circuit 25 controls each of the high frequency circuit 24, the baseband circuit 23, and the phase control circuit 28, as appropriate, and performs transmission and reception of control information. The operation switch 26 is a switch operable by an operator, and transfers an instruction from the operator to the transmission control circuit 25. The LED 27 displays an operational state of the transmission device 2. The phase control circuit 28 controls the directivity of the antennas 3.

FIG. 3 illustrates a configuration of the reception device 5. The reception devices 11 and 17 have similar configurations as that of the reception device 5. For this reason, the configuration of the reception device 5 will be described representatively. As shown in FIG. 3, the reception device 5 includes antennas 4, a high frequency circuit 29, a baseband circuit 30, an image processing circuit 31, a reception control circuit 32, an LED 33, an operation switch 34, and a phase control circuit 35.

The high frequency circuit 29 is connected to the antennas 4 and performs high frequency processing. The baseband circuit 30 is connected to the high frequency circuit 29 and performs baseband processing. The image processing circuit 31 receives from the baseband circuit 30, image data having been subjected to the baseband processing and performs image processing thereon. Then, the image processing circuit 31 outputs to the monitor 6, a signal resulting from the image processing. The phase control circuit 35 controls the directivity of the antennas 4. The reception control circuit 32 controls the entire processing of the reception device 5, thereby performing reception of the image data from the transmission device 2 as the access target. Additionally, the reception control circuit 32 controls each of the high frequency circuit 29, the baseband circuit 30, and the phase control circuit 35, as appropriate, and performs transmission and reception of control information. Further, the reception control circuit 32 stores information concerning the transmission device 2 as the access target, programs for controlling processing of the reception control circuit 32, and the like. The operation switch 34 is a switch operable by an operator and transfers an instruction from the operator to the reception control circuit 32. The LED 33 displays an operational state of the reception device 5.

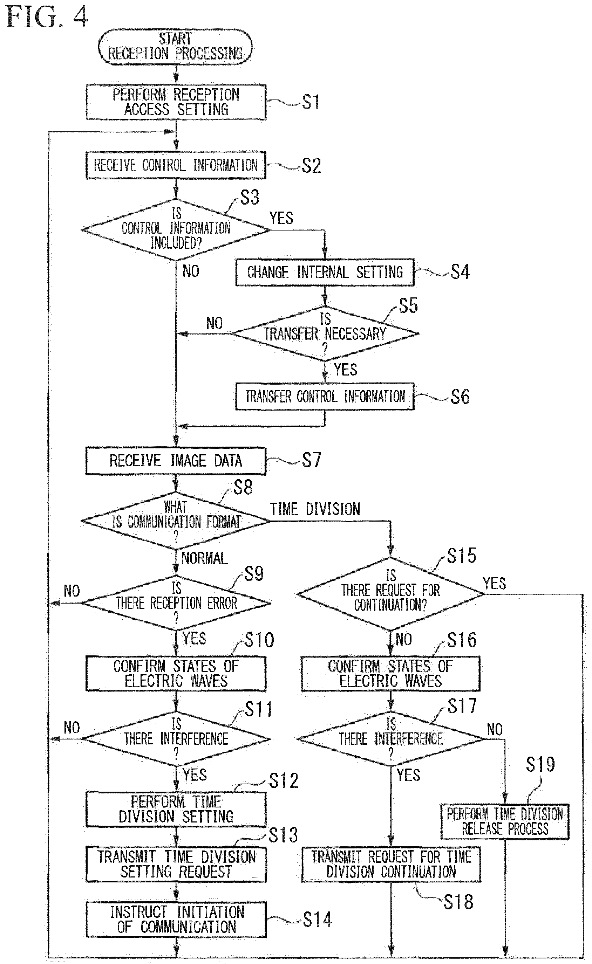

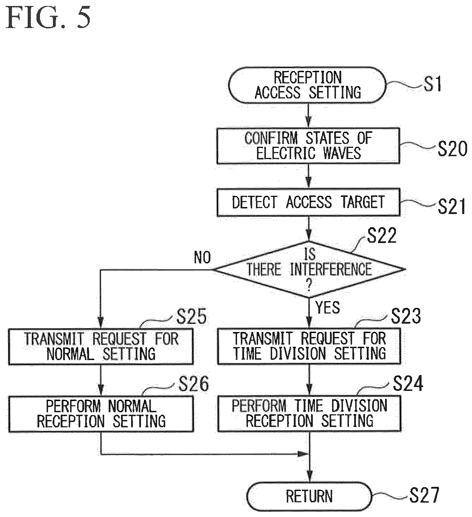

A reception process is described here with reference to FIGS. 4 and 5, while taking as an example a case where each device is arranged as shown in FIG. 1 and the reception device 5 performs the reception process. The reception process is a process to be performed by the reception control circuit of each reception device while controlling each circuit included in the reception device. As shown in FIG. 4, in the reception process, the reception control circuit 32 first performs reception access setting (S1). The reception access setting (S1) is a process of performing setting concerning access with the transmission device. The details of the reception access setting (S1) is described here with reference to FIG. 5.

In the reception access setting (S1), the reception control circuit 32 first performs electric wave state confirmation (S20). The electric wave state confirmation (S20) is a process of confirming peripheral communication environments (states of electric waves) around the reception device 5. At this point, the transmission device 2 as the access target has not yet transmitted electric waves and the electric waves received by the reception device 5 are electric waves transmitted from transmission device other than the transmission device 2.

In the electric wave state confirmation (S20), the reception control circuit 32 sets the antennas 4 to a non-directional mode via the phase control circuit 35 and measures presence/absence of electric weaves received. If received electric waves are present, the directional angle of the antennas 4 is decreased by the reception control circuit 35 and measures presence/absence of received electric waves while varying the directional direction of the antennas 4 sequentially by the predetermined angle. Thus, the direction of the transmission device other than the access target is detected, and thus obtaining transmitter information (ID). In a case where each device is arranged as shown in FIG. 1, the electric waves transmission from the transmission device 14 are received, and thus the direction of the transmission device 14 and the ID of the transmission device 14 are detected.

Then, the reception control circuit 32 performs an access target detection (S21). The access target detection (S21) is a process of detecting the direction of the transmission device 2 as the access target and obtaining transmitter information (ID). In a case where each device is arranged as shown in FIG. 1, electric waves from the transmission device 14 are being received by the reception device 5. For this reason, detection of the transmission device 2 is performed using a blank time (blank period) for transmission of image data from the transmission device 14.

As described above, transmission of image data from the transmission device 14 is repeatedly performed for each screen. For this reason, at the start of the blank period during transmission of image data from the transmission device 14, the reception control circuit 32 sets the antennas 4 to be in the non-directional mode via the phase control circuit 35 and repeatedly transmits a request for a response, to the transmission device 2 for a predetermined period. Upon receiving the request for a response, the transmission device 2 repeatedly transmits response data including the ID. The reception device 5 decreases the directional angle of the antennas 4 via the phase control circuit 35 and varies the directional direction of the antennas 4 sequentially by the predetermined angle to receive the response data from the transmission device 2, thus detecting the direction of the transmission device 2 and obtaining the ID thereof.

Subsequently, the reception control circuit 32 performs interference presence/absence determination (S22) based on a result of the electric wave state confirmation (S20). In the interference presence/absence determination (S22), it is determined whether or not the direction of the transmission device other than the access target which has been detected in the electric wave state confirmation (S20) is distinguishable by control of the directivity of the antennas 4 from the direction of the transmission device as the access target detected in the access target detection (S21). In a case where the direction of each transmission device is not distinguishable by control of the directivity of the antennas 4, the reception control circuit 32 determines that interference occurs (interference present). If it is determined that interference is present, the reception control circuit 32 first performs time division setting request transmission (S23) and transmits to both the transmission device as the access target and the transmission device other than the access target, a time division setting request that requests transmission of image data be performed in time division format.

Subsequently, the reception control circuit 32 performs time division reception setting (S24). In time division reception setting (S24), the reception control circuit 32 sets the internal setting of the reception device 5 to the time division format. Then, the reception control circuit 32 detects the start timing of the blank period after the communication format of the transmission device other than the access target and thus wireless communication is commenced. Then, the reception control circuit 32 transmits at the detected timing, a transmission initialization instruction that instructs the transmission device as the access target to initiate transmission.

Additionally, if no interference is present in the interference presence/absence determination (S22), the reception control circuit 32 first performs normal setting request transmission (S25) and transmits a normal setting request that requests the transmission device as the access target to transmit image data in normal format.

Subsequently, the reception control circuit 32 performs normal reception setting (S26) that sets the internal setting of the reception device 5 to the normal format. Finally, the reception control circuit 32 performs a process of returning to the reception process (S27) and then performs the control information reception (S2) shown in FIG. 4.

The control information reception (S2) is a process of performing reception of control information in the blank period during the wireless communication being performed by the transmission device 2. The control information includes a later-described time division continuation request and the like, as well as the time division setting request, the normal setting request, and the transmission initiation instruction, which have been described above. Subsequently, the reception control circuit 32 performs control information presence/absence determination (S3). The control information presence/absence determination (S3) is a process of determining whether or not control information has been received from another device.

In a case where control information has been received, the reception control circuit 32 performs processes (S4 to S6) associated with the instruction of the control information. The reception control circuit 32 first performs an internal setting change (S4) and thus changes the internal setting of the reception device 5 associated with the received control information. For example, if a time division setting request is received while the normal format is in use, a process of changing the communication format to the time division format is performed. Additionally, if a normal setting request is received while the time division format is in use, a process of changing the communication format to the normal format is performed. Subsequently, the reception control circuit 32 determines whether or not transfer of the received control information is necessary (S5). If it is determined that transfer is necessary, the reception control circuit 32 transfers the received control information to another transmission device (S6).

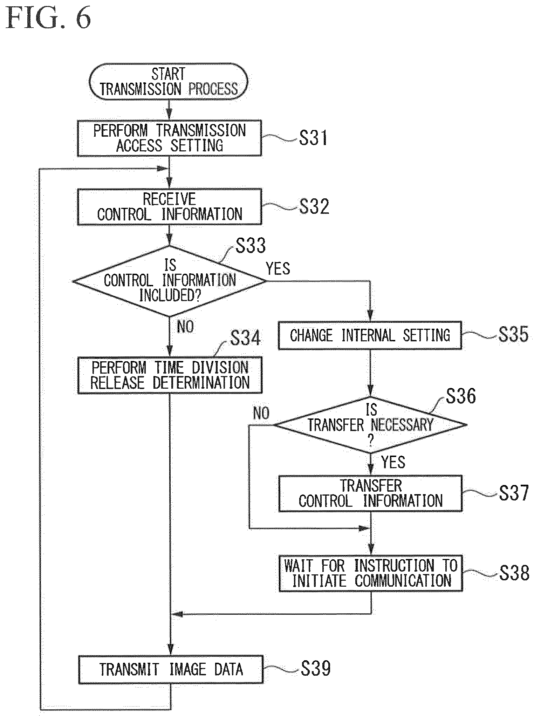

For example, the received control information is an access termination request from the transmission device as the access target. In a case where the time division format is in use for wireless communication, the access termination request is transferred to another transmission device that has a likelihood of causing interference., thus performing a process of changing the communication format of the other transmission device to the normal format. The other transmission device performs an internal setting change (S35 in FIG. 6), thereby changing the communication format to the normal format.

In a case where control information has not been received in the control information presence/absence determination, in a case where control information has been received, but transfer of the control information is not necessary, and in a case where control information has been received and transferred to another transmission device, the reception control circuit 32 performs image data reception (S7) and thus receives image data from the transmission device 2 as the access target. After the image data reception (S7) terminates, the processing branches based on the currently-set communication format (S8). The processing branches in accordance with the communication format set in the internal setting change (S4), the time division reception setting (S12), the time division reception setting (S24), and the normal reception setting (S26).

In a case where the communication format is the normal format, the reception control circuit 32 detects whether or not the amount of errors occurring in the received image data is equal to or greater than a predetermined amount (S9). If the amount of errors is less than the predetermined amount, the processing returns to the control information reception (S2). If the amount of errors is equal to or greater than the predetermined amount, the reception control circuit 32 performs electric wave state confirmation (S10). The electric wave state confirmation (S10) is a process of confirming communication environments (states of electric waves) around the reception device 5, similarly to the above-described electric state confirmation (S20). The confirmation of states of electric waves in the electric wave state confirmation (S10) is performed while the directional direction of the antennas 4 is kept directed to the direction of the transmission device as the access target.

Then, the reception control circuit 32 performs interference presence/absence determination (S11) based on a result of the electric wave state confirmation (S10). In the interference presence/absence determination (S11), it is determined whether or not an electric wave from a transmission device other than the access target has been detected. The electric wave state confirmation (S10) is performed while the directional direction of the antennas 4 is kept directed to the direction of the transmission device as the access target. For this reason, if an electric wave from a transmission device other than the access target has been detected, the direction of the transmission device as the access target cannot be distinguishable by control of the directivity of the antennas 4 from the direction of the transmission device that is not the access target, thereby causing interference to occur.

If an electric wave from a transmission device other than the access target is not detected in the electric wave state confirmation (S10), the processing returns to the control information reception (S2). Additionally, if an electric wave from a transmission device other than the access target has been detected in the electric wave state confirmation (S10), a process of changing to the time division format, the communication format used for the wireless communication with the transmission device as the access target, and the wireless communication being performed by the transmission device other than the access target which has been detected in the electric wave state confirmation (S10), is performed as follows.

If an electric wave from a transmission device other than the access target has been detected in the electric wave state confirmation (S10), the reception control circuit 32 performs time division reception setting (S12). The time division reception setting (S12) is a process of changing the internal setting of the reception device 5 to setting associated with the time division format. Subsequently, the reception control circuit 32 performs time division setting request transmission (S13). The time division setting request transmission (S13) is a process of transmitting a time division setting request that requests the transmission device as the access target and the transmission device other than the access target to change the communication format to the time division format.

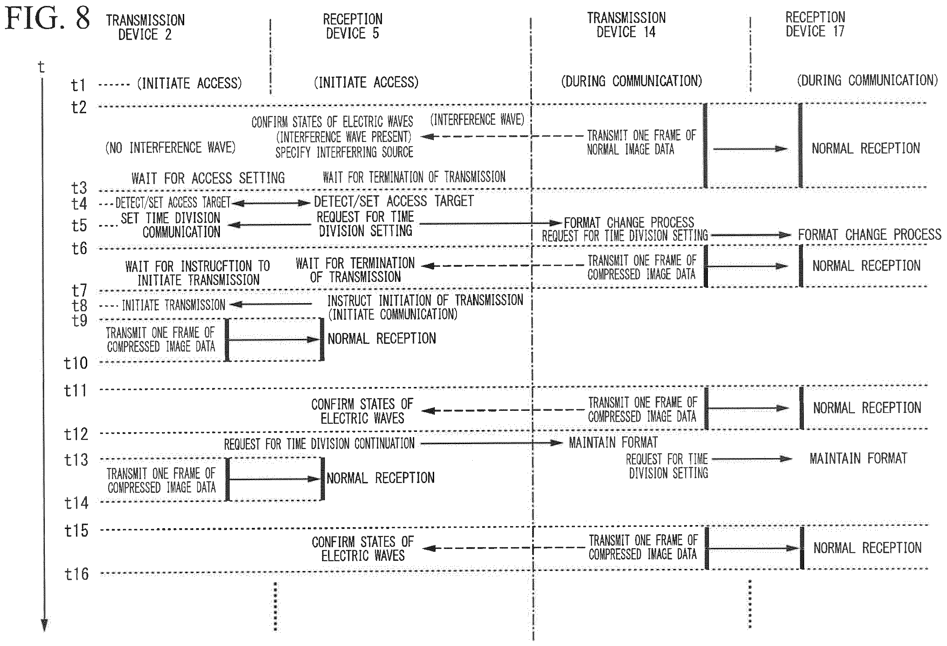

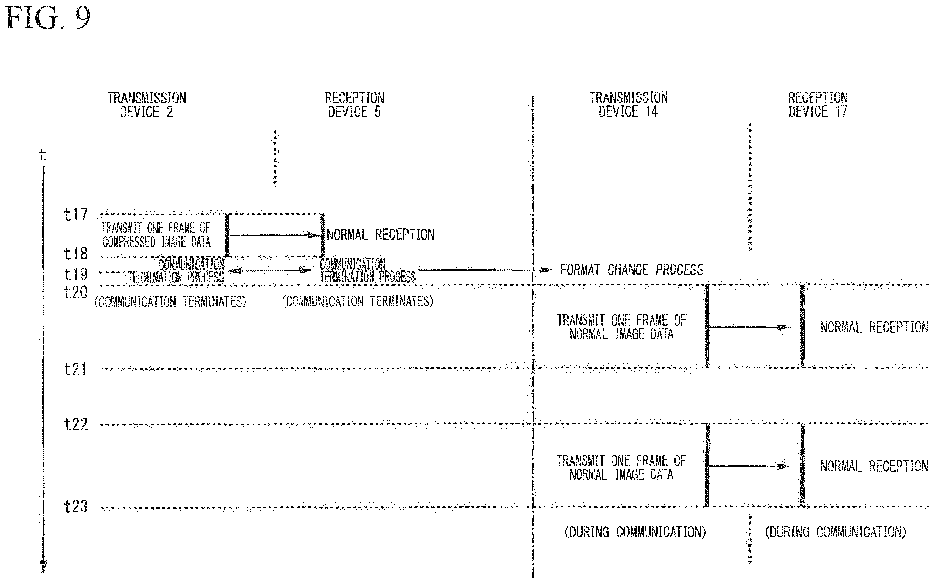

Subsequently, the reception control circuit 32 performs a communication initiation instruction (S14). The communication initiation instruction (S14) is a process of transmitting to the transmission device as the access target, a transmission initiation instruction that instructs the transmission device as the access target to initiate transmission of image data at the timing at which the communication format of the wireless communication being performed by the transmission device other than the access target is changed to the time division format, and thus wireless communication in time division format by the reception device becomes available in the blank period during that wireless communication. The execution timings of the processes from the time division reception setting (S12) to the communication initiation instruction (S14) will be described with reference to FIGS. 8 and 9.

Next, a process during wireless communication in time division format will be described here. During wireless communication in time division format, after the branching based on the communication format (S8), the reception control circuit 32 performs continuation request presence/absence determination (S15). The continuation request presence/absence determination (S15) is a process of determining whether or not continuation of the time division format has been requested from another transmission device.

If communication in time division format is being performed in response to the time division setting request from another transmission device and a later-described time division continuation request has been received in the control information reception (S2), a result of the determination becomes "Presence (YES)" and the processing returns to the control information reception (S2). If communication is being performed in time division format pursuant to the instruction from the reception device (reception device 5), and if a time division continuation request has not been received from another transmission device, a result of the determination becomes "Absence (NO)". In this case, the reception control circuit 32 performs the electric wave state confirmation (S16), thereby detecting an electric wave from a transmission device other than the access target. Confirmation of states of electric waves in the electric wave state confirmation (S16) is performed while keeping the directional direction of the antennas 4 directed to the direction of the transmission device as the access target.

Then, the reception control circuit 32 performs interference presence/absence determination (S17) based on a result of the electric wave confirmation (S16). In the interference presence/absence determination (S17), it is determined whether or not an electric wave from the transmission device other than the access target has been detected. The electric wave state confirmation (S16) is performed while keeping the directional direction of the antennas 4 directed to the direction of the transmission device as the access target. For this reason, if an electric wave has been detected from a transmission device other than the access target, the direction of the transmission device as the access target is not distinguishable by control of the directivity from the direction of the transmission device other than the access target, thereby causing interference to occur.

If an electric wave has been detected from a transmission device other than the access target, the reception control circuit 32 determines that the interference state is continuing, and performs transmission of a time division continuation request transmission (S18). The time division continuation request transmission (S18) is a process of transmitting to the transmission device other than the access target, a time division continuation request that requests that transmission device to continue the communication in time division format.

If an electric wave has not been detected from a transmission device other than the access target, the reception control circuit 32 determines that the interference state has been dissolved, and performs a time division release process (S19). The time division release process (S 19) is a process of changing to the normal format, the communication format used for communication with the transmission device as the access target. At this time, the reception control circuit 32 changes the internal setting of the reception device 5 to setting associated with the normal format.

The time division release process (S19) is performed if it is determined in the interference presence/absence determination (S17) that the interference state has been dissolved. The reception control circuit 32 has been counting the continuous execution number of times in the time division communication release process (S19). At the time the continuous execution number of times exceeds a predetermined number of times counted from the time it is determined in the interference presence/absence determination (S17) that the interference state has been dissolved, the reception control circuit 32 changes the internal setting of the reception device 5 to the setting associated with the normal format, with respect to the wireless communication with the transmission device with the access target. In the time division communication release process (S19), before the continuous execution number of times exceeds the predetermined number of times, the reception control circuit 32 performs only counting of the continuous execution number of times.

After the termination of the time division communication release process (S19), the processing returns to the control communication reception (S2). The reason that the communication format is not changed until the above continuous execution number of times exceeds the predetermined number is to certainly confirm that the interference state, which is the cause of the interference with the transmission device, has been dissolved, before performing the communication format change process.

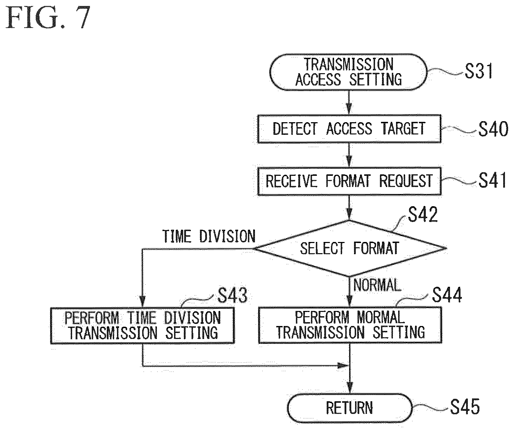

Next, a transmission process will be described with reference to FIGS. 6 and 7 while taking as an example a case where each device is arranged as shown in FIG. 1, and the transmission device 2 performs a transmission process. The transmission process is a process for the transmission control circuit included in each transmission device to perform while controlling each circuit included in the transmission device. As shown in FIG. 6, in the transmission process, the transmission control circuit 25 first performs transmission access setting (S31). The transmission access setting (S31) is a process of performing setting with respect to access to the reception device. The details of the transmission access setting (S31) will be described with respect to FIG. 7.

In the transmission access setting (S31), the transmission control circuit 25 first performs access target detection (S40). The access target detection (S40) is a process of detecting the direction of the reception device 5 as the access target, thus obtaining receiver information (ID). This process is performed by a transmission device in accordance with the access target detection (S21) performed by the reception device. In the access target detection (S40), the transmission control circuit 25 first decreases the directional angle of the antennas 3 via the phase control circuit 28 and receives a response request from the reception device 5 while varying the directional direction subsequently by a predetermined angle, thus detecting the direction and the ID of the reception device 5. Subsequently, the transmission control circuit 25 repeatedly transmits response data in the direction of the detected reception device 5 for a predetermined period, and then terminates the access target detection (S40).

Subsequently, the transmission control circuit 25 performs format request reception (S41). The format request reception (S41) is a process of receiving a request for a communication format from the reception device. In the format request reception (S41), the transmission control circuit 25 directs the directional direction of the antennas 3 toward the reception device 5 via the phase control circuit 28, and performs reception processing for a predetermined period. Thus, the transmission control circuit 25 receives a time division setting request or a normal setting request to be transmitted from the reception device 5 in the time division setting request transmission (S23) or the normal setting request transmission (S25).

Subsequently, the transmission control circuit 25 performs format selection (S42). The format selection (S42) is a process that branches in accordance with a communication format specified by the reception device 5. If the time division setting request is received from the reception device 5 and the time division format is specified, the transmission control circuit 25 performs the time division transmission setting (S43). In the time division transmission setting (S43), the transmission control circuit 25 sets the internal setting of the transmission device 2 to the setting associated with the time division format, and waits for a transmission initiation instruction from the reception device 5. After the transmission initiation instruction is received, the transmission control circuit 25 performs a process of returning to the transmission process (S45), and proceeds to execution of the control information reception (S32) shown in FIG. 8.

If a the normal setting request is received from the reception device 5 and thus the normal format is specified, the transmission control circuit 25 performs normal transmission setting (S44). In the normal transmission setting (S44), the normal transmission setting (S44) sets the internal setting of the transmission device 2 to the setting associated with the normal format, and waits for a transmission initiation instruction from the reception device 5. After the transmission initiation instruction is received, the transmission control circuit 25 performs a process of returning to the transmission process (S45), and then proceeds to execution of the control information reception (S32) shown in FIG. 8.

As shown in FIG. 6, the transmission control circuit 25 performs control information reception (S32) after the transmission access setting (S31). The control information reception (S32) is a process of performing reception of control information to be transmitted in the blank period. The control information to be received in the control information reception (S32) includes a time division setting request transmitted from the reception device 5 in the time division setting request transmission (S13), the time division continuation request transmitted from the reception device 5 in the time division continuation request transmission (S18).

Subsequently, the transmission control circuit 25 performs control information presence/absence determination (S33). The control information presence/absence determination (S33) is a process of determining whether or not control information has been received from another device. If control information has not been received, the transmission control circuit 25 performs time division release determination (S34). The time division release determination (S34) is a process of determining that the interference state is dissolved if no time division continuation request is received in a predetermined period while the time division format is in use, and thus changing the communication format to the normal format.

In the time division release determination (S34), the transmission control circuit 25 performs a process of changing the internal setting of the transmission device 2 to the setting associated with the normal format if the time division continuation request has been kept unreceived while the time division format is in use and the time division release determination has been continuously performed a predetermined number of times. In the time division release determination, the transmission control circuit 25 performs no process while the normal format is in use.

If control information has been received in the control information reception (S32), the transmission control circuit 25 performs processes (S35 to S38) associated with the control information. The transmission control circuit 25 first performs internal setting change (S35) and thus changes the internal setting of the transmission device 2 in accordance with the received control information. For example, if a time division setting request is received while the normal format is in use, a process of changing the communication format to the time division format is performed. Additionally, if a normal setting request is received while the normal format is in use, a process of changing the communication format to the time division format is performed. If the communication format has been changed to the time division format and the control information received in the control information reception (S32) is the time division continuation request, no process is performed in the internal setting change (S35).

Subsequently, the transmission control circuit 25 determines whether or not transfer of the received control information is necessary (S36). If it is determined that transfer of the received control information is necessary, the transmission control circuit 25 transfers the received control information to another information (S37). For example, if a time division setting request is received from a reception device other than the access target which has detected interference, the communication format of the concerned device is changed to the time division format. However, the communication format of a concerned device as an access target of the concerned reception device is also changed to the time division format. For this reason, a time division setting request is transferred to the reception device as the access target.

Thereafter, the transmission control circuit 25 performs communication initiation instruction waiting (S38). In the communication initiation instruction waiting (S38), the transmission control circuit 25 waits for receiving a transmission initiation instruction from the reception device 5, and proceeds to image data transmission (S39) at the timing at which the transmission initiation instruction is received. After termination of the time division release determination (S34) or the communication initiation instruction waiting (S38), the transmission control circuit 25 performs image data transmission (S39) and transmit image data to the reception device 5.

Then, the details of processing of each device included in the present image communication system are described while taking as an example sequences shown in FIGS. 8 and 9. FIGS. 8 and 9 illustrate processing of each device in a case where during wireless transmission of image data between the transmission device 14 and the reception device 17 when each device is arranged as shown in FIG. 1, wireless transmission of image data is newly initiated between the transmission device 2 and the reception device 5, and thus interference occurs. A downward direction shown in FIGS. 8 and 9 indicates passage of time.

Hereinafter, a summary of processing will be described. In a case where each device is arranged as shown in FIG. 1, electric waves transmitted from the transmission device 14 interfere with the reception device 5. The reception device 5 performs electric wave state confirmation at the start of access and detects an electric wave transmitted from the transmission device 14, thereby confirming the interference. Thereafter, a time division setting request is transmitted from the reception device 5 to the transmission device 14, and thus a change of the communication format to the time division format is instructed. The time division setting request is also transferred to the reception device 17 currently accessed by the transmission device 14.

As to the access setting between the reception device 5 and the transmission device 2, it is certain that interference will occur due to electric waves transmitted from the transmission device 14. For this reason, the communication format is set to the time division format from the beginning. Wireless communication between the transmission device 2 and the reception device 5 performed in a blank period during wireless communication between the transmission device 14 and the reception device 17 after the wireless communication between the transmission device 14 and the reception device 17 is initiated in time division format.

During the wireless communication, the device subject to the interference (the reception device 5 in this description) timely performs electric wave confirmation to confirm states of interfering electric waves, and while the interference state continues, transmits a time division continuation request for maintaining the time division format to the transmission device other than the access target (the transmission device 14 in this description). In a case where wireless communication performed in time division format between devices (between the transmission device 2 and the reception device 5 and between the transmission device 14 and the reception device 17, in this description) is terminated, the termination of the wireless communication is notified to other devices, and thus the communication format of the other devices is reset to the normal format.

Next, the details of the above processing are described with reference to FIGS. 4 to 9. At a point of time (t1) at which the transmission device 2 and the reception device 5 initiate access, the transmission device 14 and the reception device 17 are in wireless communication, and thus electric waves transmitted from the transmission device 14 have already reach the reception device 5 present in the direction of the reception device. The directional direction of the antennas 4 of the reception device 5 is being controlled to be directed toward the transmission device 2, as indicated by the directional pattern 19 shown in FIG. 1.

Wireless communication between the transmission device 14 and the reception device 17 is periodically performed. In normal image data communication, a period between t2 and t3 shown in FIG. 8 is the data communication period, a period between t3 and t6 is a pause (blank) period, and wireless communication is repeatedly performed in a period between t2 and t6. In this state, access between the transmission device 2 and the reception device 5 is initiated (t1). The reception device 5 performs electric wave confirmation (S20), confirms existence of electric waves transmitted from the transmission device 14, and detects the direction and the ID of the transmission device 14 causing the electric waves.

When a bank period for wireless communication between the transmission device 14 and the reception device 17 is initiated (t3), the reception device 5 performs access target detection (S21) and detects the direction and the ID of the transmission device 2 as the access target. Since it is detected that the transmission device 14 and the transmission device 2 are present in the same direction, the reception device 5 performs time division setting request transmission (S23) (t5), and thus requests the transmission device 2 and the transmission device 14 to perform image data communication in time division format.

The transmission device 14 receives a time division setting request from the reception device 5 in the control information reception (S32) in the blank period, performs the internal setting change (S35), and then transfers the time division setting request to the reception device 17 as the access target (S37). The communication format for the wireless communication between the transmission device 14 and the reception device 17 is changed to the time division format by the above process, and wireless transmission of compressed image data or thinned image data is initiated (t6). Upon confirming termination of transmission of one frame (t7), the reception device 5 transmits a transmission initiation instruction to the transmission device 2 (t8). The transmission device 2 waits for a transmission initiation instruction in time division transmission setting (S43). Upon receiving the transmission initiation instruction (t8), wireless communication is initiated in time division format (t9).

While wireless communication is being performed in time division format, the reception device 5 performs the electric wave state confirmation (S16) in a blank period (between t10 and t13, or the like) for that wireless communication and monitors whether or not the wireless communication between the transmission device 14 and the reception device 17 is continuing. If the wireless communication between the transmission device 14 and the reception device 17 is continuing, the reception device 5 transmits a time division continuation request to the transmission device 14 (S18) in a period (such as between t12 and tl3 or between t14 and t15) where the blank period during the wireless communication between the transmission device 2 and the reception device 5 overlaps the blank period during the wireless communication between the transmission device 14 and the reception device 17, and wireless transmission of image data is not performed. The transmission device 14 transfers the received time division continuation request to the reception device 17 (S37).

If the operation switch of the transmission device 2 or the reception device 5 is pressed to instruct termination of communication, a normal setting request is transmitted to the transmission device 14 in a termination process performed by the reception device 5 (not shown in FIGS. 4 and 5), and the communication format of the transmission device 14 is changed to the normal format (S35, t19). The normal setting request is also transferred to the reception device 17 (S37), and thereafter wireless communication between the transmission device 14 and the reception device 17 (on and after t20) is performed in normal format.

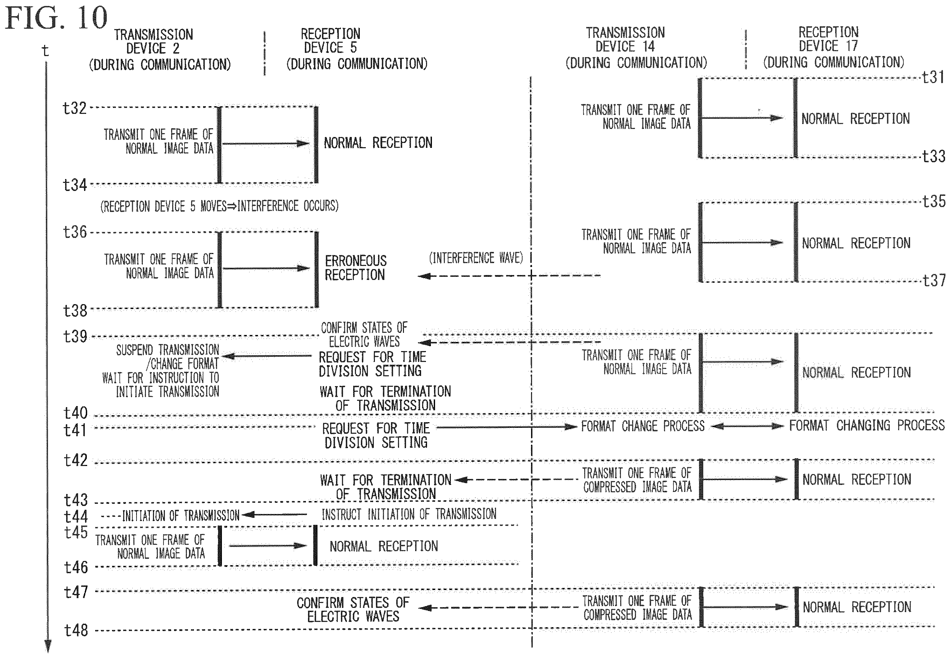

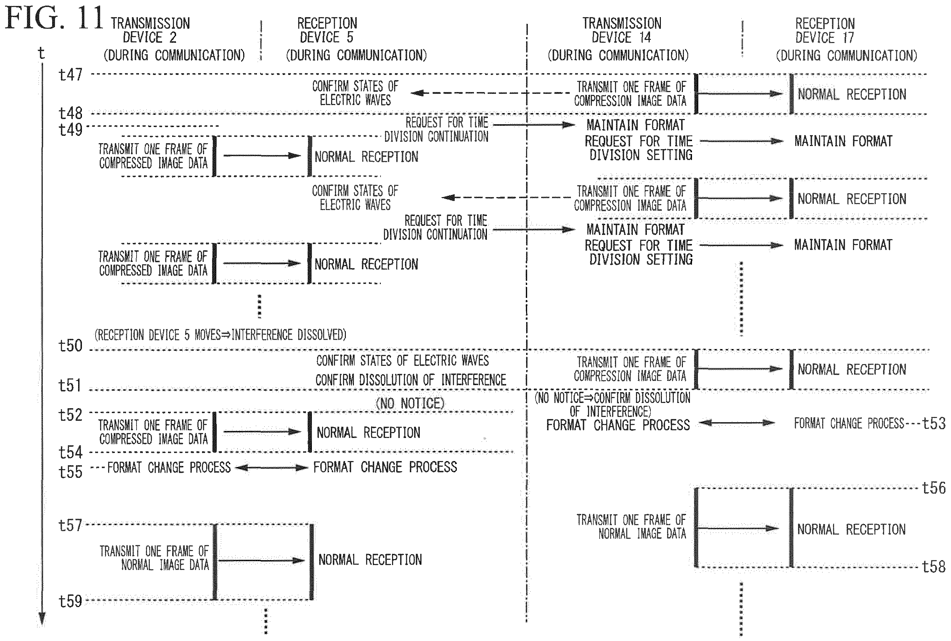

Next, the details of another processing of each device included in the present image communication system will be described with reference to sequences shown in FIGS. 10 and 11. FIGS. 10 and 11 illustrate processing of each device in a case where interference occurs due to movement of the reception device 5 during wireless transmission of image data between the transmission device 2 and the reception device 5 and wireless transmission of image data between the transmission device 14 and the reception device 17 when each device is arranged as shown in FIG. 1. A downward direction shown in FIGS. 10 and 11 indicates passage of time. It is assumed in this example that the reception device 5 moves from the position A to the position B shown in FIG. 1.

Hereinafter, a summary of processing will be described. When the reception device 5 is present at the position A, it is assumed that wireless communication between the transmission device 2 and the reception device 5 does not interfere with wireless communication between the transmission device 14 and the reception device 17. When the reception device 5 moves to the position B, an electric wave transmitted from the transmission device 2 and an electric wave transmitted from the transmission device 14 reach the reception device 5 from substantially the same direction, thus causing interference to occur. Once interference occurs, errors occur in the data received by the reception device 5. For this reason, the reception device 5 performs electric wave state confirmation and confirms the device (transmission device 14) transmitting the interfering electric wave. Upon confirming that interference is occurring, the reception device 5 changes the communication format to the time division format.

Thereafter, the reception device 5 transmits a time division setting request to the transmission device 2. When transmission from the transmission device 14 is discontinued (blank period), the reception device 5 transmits a time division setting request to the transmission device 14. The time division setting request received by the transmission device 14 is transferred to the reception device 17. Wireless communication between the transmission device 2 and the reception device 5 is performed after wireless communication between the transmission device 14 and the reception device 17 is initiated in time division format, in a blank period during the wireless communication between the transmission device 14 and the reception device 17.

A device subject to the interference (the reception device 5 in this description) timely performs electric wave confirmation to confirm states of interfering electric waves, and while the interference state continues, transmits a time division continuation request to a device other than the access target (the transmission device 14 in this description). When the reception device 5 moves again to the position where no interference is occurring (such as a position A shown in FIG. 1), the reception device 5 recognizes that the interference state is dissolved and suspends transmission of the time division continuation request.

Since the interference is dissolved, the reception device 5 changes the communication format to the normal format and transmits a normal setting request to the transmission device 2. The transmission device 2 receives the normal setting request and changes the communication format to the normal format. Additionally, when the reception of the time division continuation request stops, the transmission device 14 recognizes that the interference state is dissolved. Then, the reception device 5 changes the communication format to the normal format and transmits a normal setting request also to the transmission device 17. As a result, wireless communication between the transmission device 2 and the reception device 5 and wireless communication between the transmission device 14 and the reception device 17 are performed in normal format.

Next, the details of the above processing will be described with referent to FIGS. 4 to 7, 10, and 11. As described above, interference does not occur when the reception device 5 is present at the position A shown in FIG. 1 (t31-t34). When the reception device 5 moves to the position B shown in FIG. 1 and thus interference occurs, reception errors occur to the reception device 5 during reception of image data in normal format (S7-S9, t35-t38). Upon detecting occurrence of the reception errors (S9), the reception device 5 performs electric wave state confirmation (S10) (t39).

The reception device 5 receives an electric wave transmitted from the transmission device 14 in the electric wave state confirmation (S10) and thus detects the interference (S11). Upon detecting the interference, the reception device 5 changes the communication format to the time division format in the time division reception setting (S12). Then, the reception device 5 transmits a time division setting request to the transmission device 2 in the time division setting request transmission (S13). Additionally, in the time division setting request transmission (S13), the reception device 5 transmits a time division setting request to the transmission device 14 in a blank period during wireless communication between the transmission device 14 and the reception device 17 (t41).

Thereafter, wireless communication between the transmission device 14 and the reception device 17 is initiated in time division format (t42). The reception device 5 detects a start timing of the blank period during the wireless communication between the transmission device 14 and the reception device 17 (t43), and transmits a transmission initiation instruction (S14) to the transmission device 2 (S14, t44). The transmission device 2 receiving the transmission initiation instruction (S14) terminates the initiate communication instruction waiting (S38), and initiates image data transmission (S39) (t45). Thereafter, the wireless communication between the transmission device 2 and the reception device 5 and the wireless communication between the transmission device 14 and the reception device 17 are performed in time division format, and therefore no interference occurs.

While performing wireless communication in time division format, the reception device 5 is detecting an electric wave transmitted from the transmission device other than the access target in the electric wave state confirmation (S16). In a state where electric waves for the wireless communication between the transmission device 14 and the reception device 17 are received, a time division continuation request transmission (S18) is performed, and the time division continuation request is transmitted to the transmission device 14 (t49). The time division continuation request is transmitted from the transmission device 14 also to the transmission device 14 (S37).

If the reception device 5 moves and interference is dissolved (on and after t50), the reception device 5 performs electric wave state confirmation (S16) and detects that the interference state is dissolved (S17). As a result, the reception device 5 suspends the time division continuation request transmission (S18). Additionally, if a non-interference state continues for a predetermined period, the reception device 5 changes the communication format to the normal format (S19, t55). Further, the transmission device 2 also changes the communication format to the normal format (S34, t55).

If no time division continuation request has been received for a predetermined period, the transmission device 14 determines in the time division release determination (S34) that the interfering state is dissolved, and changes the communication format to the normal format (S34, t53). Additionally, the reception device 17 also changes the communication format to the normal format (S19, t53). If the interference state is dissolved, the communication format used by each device is reset to the normal format by the above process.

The LED 27 of the transmission device 2 and the LED 33 of the reception device 5 are LEDs that display an operation state of each device. When each device is performing wireless communication in time division format, each LED displays a warning indicating occurrence of interference. When the communication format is reset to the normal format, each LED terminates display of the warning.

Here, the functions of the reception device 5 are implemented by the reception control circuit 32, which is a computer of the reception device 5, reading and executing a program for controlling the processing of the reception control circuit 32. Additionally, the program for controlling the processing of the reception control circuit 32 may be provided by a "computer-readable recording medium", such as a flash memory. Further, the above-described program may be transmitted from a computer storing that program in a storage device or the like thereof to another computer via a transmission medium or by carrier waves passing through a transmission medium. Here, the "transmission medium" that transmits the program means a medium having a function of transmitting information, such as a network (communication network), for example, the Internet, or a communication line (communication line), for example, a telephone line. Additionally, the above program may be a program that implements part of the above-described functions. Further, the above program may include a differential file (differential program) that can implement the above-described functions in combination with the program already stored in the computer.

As described above, according to the present embodiment, in a case where the direction of the transmission device as the access target viewed from the reception device is not distinguishable from the direction of the transmission device other than the access target, the communication format is changed from the normal format to the time division format. Thus, it becomes possible to adjust the communication timings so that the transmission of image data by the transmission device as the access target is not performed simultaneously with the transmission of image data by the transmission device other than the access target. Therefore, it is possible to prevent interference from occurring and thus perform reliable wireless communication.

Additionally, in the present invention, it is possible to prevent interference from occurring by the minimum system structural change (only the change of the transmission device and the reception device).

Further, a warning is displayed in a case where the communication format is set to be the time division format, thus making it possible to give a notice of occurrence of interference. Thus, it is possible to encourage a device to move to the position where no interference occurs.

### (Second Embodiment)

Next, a second embodiment of the present invention will be described. Descriptions will be given in the present embodiment while taking as an example a case where the present invention is applied to an image communication system including: three sets each including an image sensor device that captures an image, a transmission device that wirelessly transmits the captured image, a reception that receives the wirelessly-transmitted image, a monitor that displays the received image; and a remote control that sets an access relationship between the transmission device and the reception device. Additionally, wireless communication is generally performed in three-dimensional space. To simplify descriptions, however, descriptions will be given with respect to a case where wireless communication is performed in two-dimensional space.

At the time of access setting, each of the transmission devices and the reception devices performs measurement of states of electric waves and notifies a remote control of a result of the measurement. The remote control confirms access expected to be subject to interference, based on the result of the measurement and an access relationship between each device. The transmission device and the reception device, which are associated with the access expected to be subject to interference, receive instructions from the remote control and use the time division format, thus preventing interference from occurring.

A communication timing of each device is controlled by the remote control, and each wireless communication in the image communication system is synchronized. Control information is transmitted from the remote control to each device in a blank duration (blank period) where no transmission of image data is performed.

### [System Configuration]

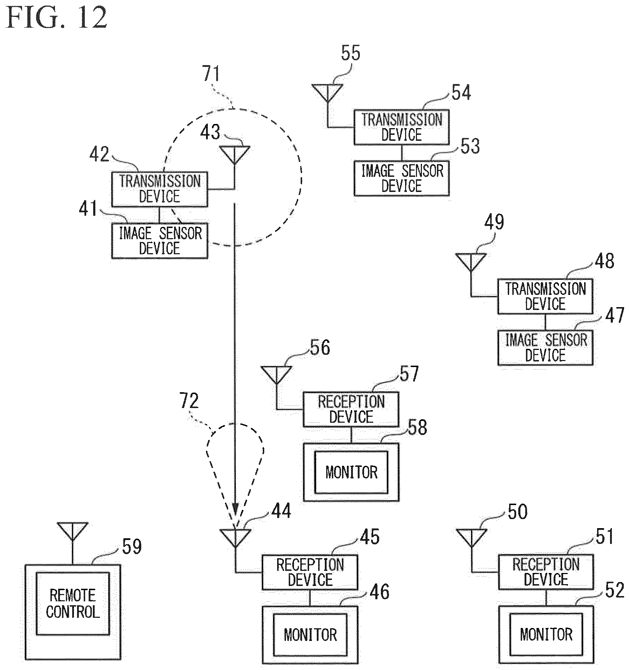

First, a summary of the image communication system is described with reference to FIG. 12. The image communication system shown in FIG. 12 includes three image sensor transmission units (an image sensor device 41/a transmission device 42, an image sensor device 47/a transmission device 48, and an image sensor device 53/a transmission device 54) and three reception display units (a reception device 45/a monitor 46, a reception device 51/a monitor 52, and a reception device 57/a monitor 58).

The image sensor transmission unit is one-to-one connected to the reception display unit. An access target for data transmission and reception can be set as appropriate. In the present embodiment, the image sensor transmission unit including the image sensor device 41 and the transmission device 42 is connected to the reception display unit including the reception device 45 and the monitor 46. Additionally, the image sensor transmission unit including the image sensor device 47 and the transmission device 48 is connected to the reception display unit including the reception device 51 and the monitor 52. Further, the image sensor transmission unit including the image sensor device 53 and the transmission device 54 is connected to the reception display unit including the reception device 57 and the monitor 58.

The transmission device 42 is mounted with an antenna 43. The transmission device 48 is mounted with an antenna 49. The transmission device 54 is mounted with an antenna 55. The transmission device 45 is mounted with an antenna 44. The transmission device 51 is mounted with an antenna 50. The transmission device 57 is mounted with an antenna 56. Each of the transmission device and the reception device has a similar configuration as that of the first embodiment.

In the present embodiment, descriptions will be given while taking as an example a case where each device is arranged such that the direction of the transmission device 42 as the access target viewed from the reception device 45 is substantially the same as the direction of the transmission device 54 not as the access target. In the image communication system of the present embodiment, in a case where each device is arranged as shown in FIG. 1, a communication format of wireless communication to be performed by the transmission device 42 and a communication format of wireless communication to be performed by the reception device 54 are changed to a time division format, thereby preventing a transmission time of each transmission device from overlapping each other and therefore preventing interference with the reception device 5.

The remote control 59 confirms an access relationship between each transmission device and each reception device, and states of electric waves of each device. Then, the remote control 59 gives instructions to each device so that interference does not occur.

### [Detailed Description]

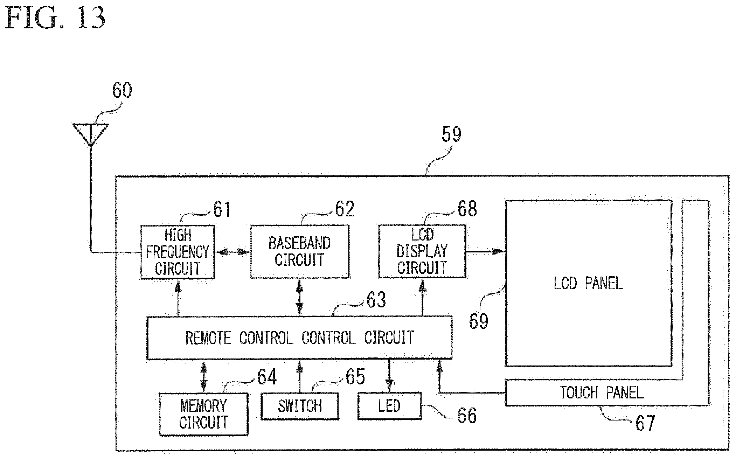

FIG. 13 illustrates a configuration of a remote control 59. As shown in FIG. 13, the remote control 59 includes an antenna 60, a high frequency circuit 61, a baseband circuit 62, a remote control circuit 63, a storing circuit 64, an operation switch 65, an LED 66, a touch panel 67, an LCD display circuit 68, and an LCD panel 69.

Since the remote control 59 performs wireless communication without confirming the direction of each device included in the image communication system, the antenna 60 is a non-directional antenna. The high frequency circuit 61 is connected to the antenna 60 and performs high frequency processing. The baseband circuit 62 performs baseband processing on communication data transferred between the high frequency circuit 61 and the remote control circuit 63. The remote control circuit 63 controls processing of the entire remote control 59. The storing circuit 64 stores data for initial setting with respect to each device included in the image communication system, measurement data concerning states of electric waves transmitted from each device, and the like. The operation switch 65 and the touch panel 67 are operable by an operator and transfer an instruction from the operator to the remote control circuit 62. The LED 66 displays an operational state of the remote control 59. The LED panel 69 displays information concerning operation of the remote control 59, information concerning access setting processing with respect to each device included in the image communication system. The LCD display circuit 68 performs display processing of the LCD panel 69 based on an instruction from the remote control circuit 63.

Hereinafter, a summary of processing of the remote control 59 is described. The remote control circuit 63 performs wireless communication with each device included in the image communication system via the antenna 60, the high frequency circuit 61, and the baseband circuit 62. Thus, the remote control circuit 63 receives data indicating a result of measurement of states of electric waves around each device and stores the received data in the storing circuit 64. Additionally, the remote control circuit 63 displays the information on the LCD panel 69 via the LCD display circuit 68. When an operator who has confirmed the displayed information inputs an instruction to specify a transmission device and a reception device to be accessed via the touch panel 67 or the operation switch 65, the remote control circuit 63 detects that instruction and stores in the storing circuit 64, information concerning access setting associated with the contents of the instruction. Additionally, the remote control circuit 63 performs wireless communication via the baseband circuit 62, the high frequency circuit 61, and the antenna 60, thus notifying each of the transmission devices and the reception devices included in the image communication system of the information concerning the access setting included in the image communication system. The configuration and processing of each unit included in the above-described remote control 59 are known, and therefore further descriptions are omitted here.

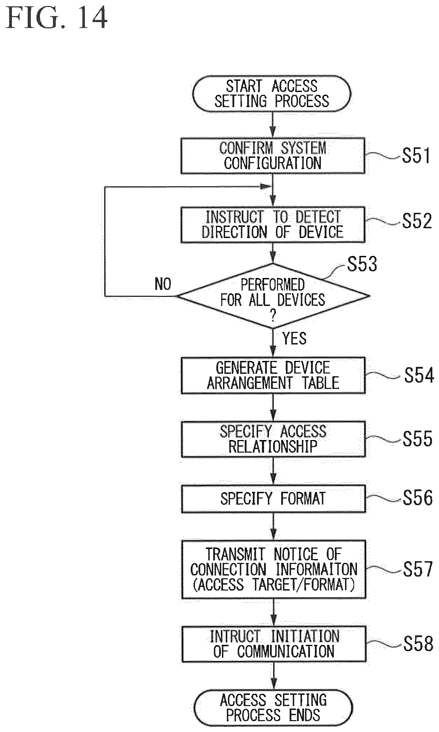

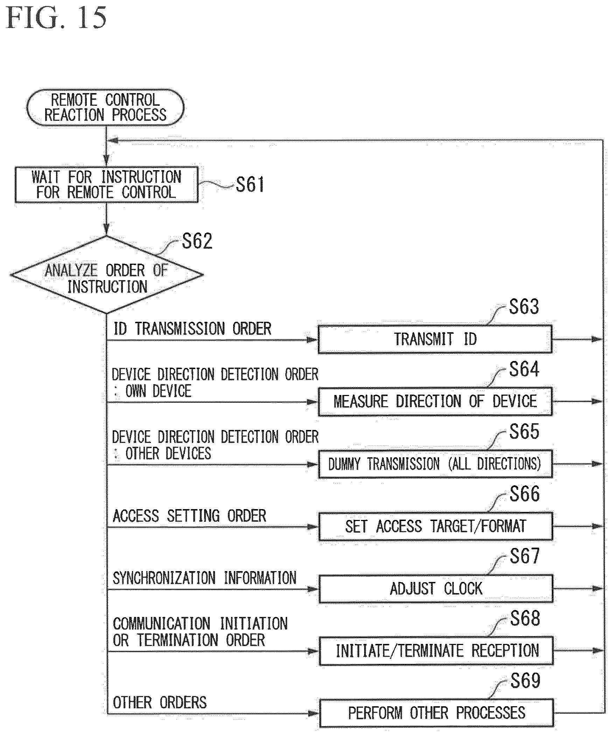

FIG. 14 illustrates flow of an access setting process to be performed by the remote control 59. The remote control circuit 63 of the remote control 59 performs an access setting process. The access setting process is a process of performing setting of an access relationship between each transmission device and each reception device, and a communication format to be used, in accordance with an instruction from the operator that operates the remote control 59. FIG. 15 illustrates flow of a remote control response process to be performed by the reception device. The remote control response process is a process to be performed by the reception device in response to a request from the remote control 59.

Processing of each device in the access setting in a case where each device is arranged as shown in FIG. 12 is described with reference to FIGS. 14 and 15. At the start of the access setting, each transmission device and each reception device are not connected and no transmission of image data is performed. At this point of time, each transmission device and each reception device are in an idle state of waiting for an instruction from the remote control 59.

The reception control circuit of the reception device 45 performs a remote control response process. In the remote control response process, the reception control circuit performs remote instruction waiting (S61) in the idle state where there is no instruction from the remote control 59. In the remote instruction waiting (S61), the reception control circuit sets the directivity of the antenna to be non-directivity via the phase control circuit and waits in a reception available state.

The remote control circuit 63 of the remote control 59 first performs system configuration confirmation (S51). The system configuration confirmation (S51) is a process of confirming an ID of each device included in the image communication system. In the system configuration confirmation (S51), the remote control circuit 63 transmits an ID transmission instruction to each of the transmission devices and the reception devices. In accordance with the instruction, each device sequentially transmits an ID after a predetermined waiting period has passed. Here, the waiting period for each device is determined using an ID or the like so that the timings of transmitting the IDs do not overlap one another.

The reception control circuit of the reception device 45 receives the ID transmission instruction from the remote control 59 in remote control instruction waiting (S61). Then, the reception control circuit analyzes the contents of the instruction (S62), thus recognizes that transmission of the ID is instructed, and performs of ID transmission (S63). In the ID transmission (S63), the reception control circuit transmits the ID of the reception control circuit.

The remote control circuit 63 of the remote control 59 receives the ID from each device and confirms the ID of the device included in the image communication system. Thereafter, the remote control circuit 63 performs a device direction detection instruction (S52). The device direction detection instruction (S52) is a process of transmitting a device direction detection order indicating an instruction of the device direction detection process to have the device direction detection process performed, and thus receiving a result of detection.

The device direction detection process is a process for each device to confirm states of electric waves around the device, measure the directions of devices other than the concerned device, and transmit to the remote control 59, a list of devices present in the same direction summarizing IDs of a plurality of devices present in the same direction viewed from the concerned device. The device direction detection order includes information required for detecting the directions (such as an ID of a device to perform the device direction detection process, and an instruction on timings at which later-described dummy data are transmitted).

Hereinafter, a description is given while taking as an example a case where the reception device 45 performs a device direction detection process. Where each device is arranged as shown in FIG. 12, the transmission device 42, the transmission device 54, and the reception device 57 are present in the same direction viewed from the reception device 45.

In the device direction detection instruction (S52), the remote control circuit 63 of the remote control 59 transmits a device direction detection order to each device having the ID confirmed in the system configuration confirmation (S51), and receives a result of detection from each device. The reception control circuit of the reception device 45 receives the device direction detection order from the remote controller 59 in the remote control instruction waiting (S61). The reception control circuit performs analysis of the contents of the instruction (S62), thus recognizes that the device direction detection process has been instructed to the concerned device, and performs device direction measurement (S64).

The device direction measurement (S64) is a process of decreasing the directivity of the antenna and thus receives dummy data from each device, thereby detecting the direction of each device and notifying the remote control 59 of a result of the detection. In the device direction measurement (S64), the reception control circuit waits for reception of dummy data while varying the directional direction sequentially by a predetermined angle by decreasing the directivity of the antenna via the phase control circuit. If the dummy data is received, the reception control circuit recognizes that the directional direction of the antenna at that time is the direction of another device. Then, the reception control circuit correlates the ID of the transmission source included in the dummy data to the detected direction. Further, in the device direction measurement (S64), the reception control circuit generates a list of devices present in the same direction which includes IDs of a plurality of devices, the detected directions of which are the same, and then transmits the list of devices to the remote control 59.

In a case where the remote control 59 performs a device direction detection instruction (S52) to the reception device 45, the reception devices other than the reception device 45 also receive the device direction detection order from the remote control 59 in the remote instruction waiting (S61). The reception control circuit of the reception devices other than the reception device 45 analyzes the contents of the instruction (S62), recognizes that the device direction detection process has been instructed to the reception device 45 other than the concerned device, and performs dummy transmission (S65).

The dummy transmission (S65) is a process of transmitting dummy data at a predetermined timing at which dummy data is transmitted in a state where the directivity of the antenna is set to be non-directivity. In the dummy transmission (S65), the reception control circuit transmits the dummy data to the reception device 45 having the ID included in the device direction detection order. The transmission of dummy data is performed while the directivity of the antenna is set to be non-directivity at the timing instructed to each device in the device direction detection order so that the transmission timing of each device does not overlap one another. Here, although not shown, the transmission device also performs measurement of device directions and dummy transmission in a case where the device direction detection order is received.

FIG. 12 shows a state where the transmission device 42 sets the directivity of antenna 43 to be non-directivity as indicated by a directive pattern 71 and transmits dummy data, and the reception device 45 receives the dummy data from the transmission device 42 while decreasing the directivity of the antenna 44 as indicated by a directive pattern 72. In FIG. 12, if the reception device 45 performs the device direction detection process, an obtained result will be such that dummy data are received from the transmission device 54 and the reception device 57 at the different timings, and thus the transmission device 42, the transmission device 54, and the reception device 57 are present in the same direction.

The remote control circuit 63 of the remote control 59 checks whether or not the device direction detection instruction (S52) is given to all the devices included in the image communication system (S53). When the device direction detection instruction (S52) to all the devices are completed, the remote control circuit 63 performs device arrangement table generation (S54). The device arrangement table generation (S54) is a process of summarizing the contents of the list of devices present in the same direction, which has been received from each device, and generating a device arrangement table. The generated device arrangement table is stored in the storing circuit 64.

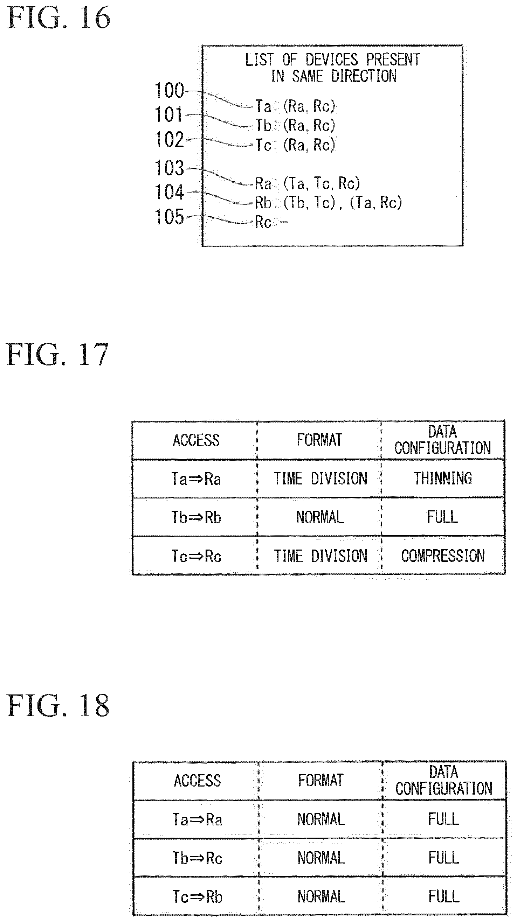

FIG. 16 illustrates an example of the device arrangement table. The device arrangement table shown in FIG. 16 summarizes information 100 to 105 of the devices present in the same direction viewed from each device. It is shown in FIG. 16 that the ID of the transmission device 42 is Ta, the ID of the transmission device 48 is Tb, the ID of the transmission device 54 is Tc, the ID of the reception device 45 is Ra, the ID of the reception device 51 is Rb, and the ID of the reception device 57 is Rc. For example, the contents of the information 100 is "Ta: (Ra, Rc)", which indicates that the reception device 45 (Ra) and the reception device 57 (Rc) are present in the same direction viewed from the transmission device 42 (Ta). A similar description can be applied to the contents of the information 101 to 102.

The contents of the information 103 is "Ra: (Ta, Tc, Rc)", which indicates that the transmission device 42 (Ta), the transmission device 54 (Tc), and the reception device 57 (Rc) are present in the same direction viewed from the reception device 45 (Ra). The contents of the information 104 is "Rb: (Tb, Tc), (Ta, Rc)", which indicates that the transmission device 48 (Tb) and the transmission device 54 (Tc) are present in the same direction viewed from the reception device 51 (Rb) and that the transmission device 42 (Ta) and the reception device 57 (Rc) are present in the same another direction. The contents of the information 105 indicates that no devices are present in the same direction viewed from the reception device 57 (Rc).

The remote control control circuit 63 of the remote control 59 performs access relationship specification (S55) after the device arrangement table generation (S54). The access relationship specification (S55) is a process of determining an access relationship between each device based on an instruction from the operator. In the access relationship specification (S55), when the remote control control circuit 63 displays information or the like concerning accessible devices on the LCD panel 69 via the LCD display circuit 68, the touch panel 67 or the operation switch 65 is operated by the operator, and thus an instruction to instruct a pair of the transmission device and the reception device to access each other is input. Further, in the access relationship specification (S55), the remote control control circuit 63 detects the input instruction and stores, in the storing circuit 64, the information indicating the pair of the transmission device and the reception device to access each other, based on the contents of the instruction. Here, instead of the operator determining access between each device, the remote control 59 may determine access between each device based on the information previously set to the remote control 59.

After the access relationship specification (S55), the remote control control circuit 63 performs format specification (S56). The format specification (S56) is a process of determining a communication format to be used for the access specified in the access relationship specification (S55). In the format specification (S56), based on the information indicating the pair of the transmission device and the reception device to access each other, and the device arrangement table, the remote control control circuit 63 determines whether or not the direction of the transmission device as the access target viewed from the reception device is distinguishable by control of directivity of the antenna from the direction of the transmission device other than the access target, that is, whether or not interference occurs. Then, the remote control control circuit 63 determines the communication format to be used for access subject to interference, to be the time division format. If the direction of the transmission device as the access target viewed from the reception device is the same as the direction of the transmission device other than the access target and an access target of that transmission device, the remote control control circuit 63 determines that interference will occur.

For example, a description is given here with respect to a case where each device is arranged as shown in FIG. 12, access is specified such that the transmission device 42 (Ta) is connected to the reception device 45 (Ra), the transmission device 48 (Tb) is connected to the reception device 51 (Rb), and the transmission device 54 (Tc) is connected to the reception device 57 (Rc). It is shown in the device arrangement table (FIG. 16) that the transmission device 42 (Ta), the transmission device 54 (Tc), and the reception device 57 (Rc) are present in the same direction viewed from the reception device 45 (Ra). For this reason, the remote control control circuit 63 determines that wireless communication between the transmission device 42 (Ta) and the reception device 45 (Ra) will interfere with wireless communication between the transmission device 54 (Tc) and the reception device 57 (Rc). Thus, the remote control control circuit 63 determines the communication format used for those wireless communication to be the time division format. Here, a communication format to be used for access not subject to interference is determined to be the normal format as default.

In the format specification (S56), the remote control control circuit 63 determines the communication format used for those wireless communication subject to interference to be the time division format, as described above, and selects a data configuration of image data to be used for each access. Regarding the data configuration, a data configuration based on an instruction from the operator, or a data configuration specified as default, is selected from among data configurations available to wireless communication subject to interference. In a case where the operator selects the data configuration, a quality of image is selectable within a selectable range in accordance with a state of communication.

It is necessary to reduce the amount of data to be transmitted in one cycle during the use of the time division format to less than a half the amount of data to be transmitted in one cycle during the use of the normal format. For this reason, the data configurations available during the use of the time division format are limited. As one example, the data configurations available during the use of the time division format include compressed data and thinned data.

FIG. 17 illustrates an example of a result of the access setting. Since wireless communication between the transmission device 42 (Ta) and the reception device 45 (Ra) is interfered with by another wireless communication, the communication format is determined to be the time division format, and thinned data is selected as the data configuration. Since wireless communication between the transmission device 48 (Tb) and the reception device 51 (Rb) is not interfered with by another wireless communication, the communication format is determined to be the normal format, and full data is selected as the data configuration. Since wireless communication between the transmission device 54 (Tc) and the reception device 57 (Rc) is interfered with by another wireless communication, the communication format is determined to be the time division format, and compressed data is selected as the data configuration

Even if each device is arranged as shown in FIG. 12, if the access relationship is different from the above, specification of a communication format and selection of a data configuration also differ. For example, if the transmission device 42 (Ta) is connected to the reception device 45 (Ra), the transmission device 48 (Tb) is connected to the reception device 57 (Rc), and the transmission device 54 (Tc) is connected to the reception device 51 (Rb), it is determined that interference will not occur. FIG. 18 illustrates a result of access setting in this case. It is shown that for all the accesses, the communication format is set to the normal format, and the data configuration is set to be full data.

After specification of a format (S56), the remote control control circuit 63 of the remote control 59 performs access information notice (S57). The access information notice (S57) is a process of notifying each of the transmission devices and the reception devices included in the image communication system, of an access target based on the access relationship specified in the access relationship specification (S55) and the communication format determined in the format specification (S56). In the access information notice (S57), the remote control control circuit 63 transmits to each device, an access setting instruction including information concerning an access target of each device and information indicating a communication format to be used by each device.

At this time, each of the transmission device and the reception device is in a state of waiting for an instruction from the remote control 59. For example, in a case where the reception control circuit of the reception device 45 is performing the remote instruction waiting (S61), if the reception control circuit receives an access setting instruction from the remote control 59, the reception control circuit recognizes in an instruction content analysis (S62) that the access setting has been specified, and performs access target/format setting (S66). The access target/format setting (S66) is a process of setting, in the reception device 4, an access target or a communication format in accordance with the contents specified by the remote control 59.

Subsequently, the remote control control circuit 63 of the remote control 59 transmits to each of the transmission devices and the reception devices, synchronization information to synchronize the processing timings of each of the transmission devices and the reception devices included in the image communication system, based on time information included in the remote control 59 (not shown). The reception control circuit of the reception device 45 is performing the remote control waiting (S61), and if synchronization information is received from the remote control 59, recognizes in the instruction content analysis (S62) that a process for synchronization has been specified, thereby performing a clock adjustment process (S67).

The clock adjustment process (S67) is a process of synchronizing the processing timings of the reception device 45 with the processing timings of the remote control 59. The synchronization information is information for correcting the difference in frequency of the internal clock of each of the transmission devices and the reception devices included in the image communication system and synchronizing each device with the remote control 59. During operation of the image communication system, the synchronization information is timely notified to each device.

Then, the remote control control circuit 63 of the remote control 59 gives a communication initiation instruction (S58). The communication initiation instruction (S58) is a process of transmitting to each of the transmission devices and the reception devices, a communication initiation instruction to initiate wireless communication. In the communication initiation instruction (S58), the remote control control circuit 63 determines a timing of initiating wireless communication for each of the transmission devices and the reception devices, based on the access relationship specified in the access relationship specification (S55) and the communication format determined in the format specification (S56). Then, the remote control control circuit 63 transmits to each of the transmission devices and the reception devices, a communication initiation instruction including information concerning the initiation timings thereof. For a plurality of accesses determined to be subject to interference in the format specification (S56), the remote control control circuit 63 determines an initiation timing of wireless communication by each of the transmission devices and the reception devices so that the timings for the transmission of image data to be performed for the respective accesses do not overlap one another. After the above processing, the access setting process ends.

The reception control circuit of the reception device 45 is performing the remote instruction waiting (S61), and if the communication initiation instruction is received from the remote control 59, recognizes in the instruction content analysis (S62) that initiation of wireless communication has been specified, thus performing a reception initiation/termination process (S68). In the reception initiation/termination process (S68) in a case where the communication initiation instruction is received, the reception control circuit initiates reception processing at the initiation timing specified by the communication initiation instruction.

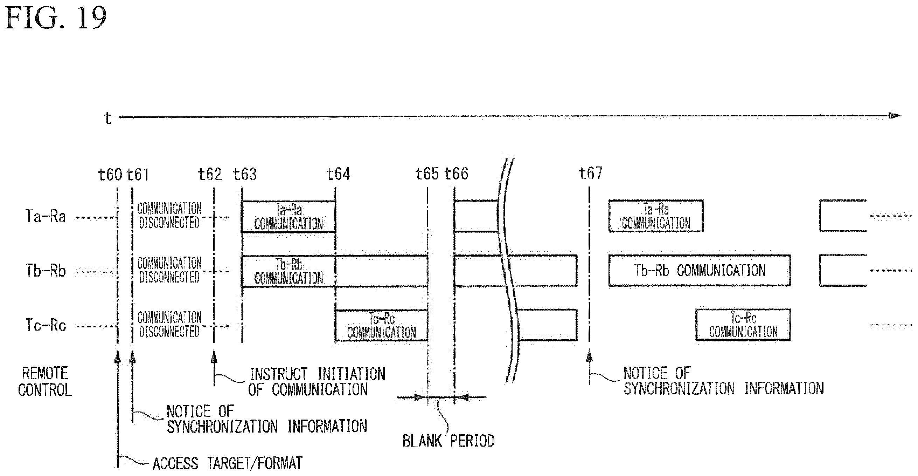

FIG. 19 illustrates communication timings from the access setting to the initiation of communication shown in FIG. 17. A right direction shown in the drawing represents passage of time. "Ta-Ta" and the like shown in the drawing each represents a combination of a transmission device and a reception device. An arrow represents control information notified from the remote control 59.

For example, at time t60, an access target and a communication format are notified from the remote control 59 to each device in the access information notice (S57). Subsequently, at time t61, synchronization information is notified from the remote control 59 to each device, and each device performs a synchronization process. Thereafter, at time t62, the communication initiation timing is notified from the remote control 59 to each device, and each device initiates wireless communication at the notified timing.

As illustrated, wireless communication between the transmission device 42 (Ta) and the reception device 45 (Ra), and wireless communication between the transmission device 48 (Tb) and the reception device 51 (Rb) are initiated at time t63. Wireless communication between the transmission device 54 (Tc) and the reception device 57 (Rc) is initiated at time t64. Transmission of image data between the transmission device 42 (Ta) and the reception device 45 (Ra), and transmission of image data between the transmission device 54 (Tc) and the reception device 57 (Rc) are performed so that each transmission does not overlap each other. Thus, interference is prevented.

A period between t65 and t66 is a blank period in which control information is timely notified from the remote control 59 to each device. An aspect that synchronization information is notified is shown at time t67 in the blank period.

If the reception device 45 receives from the remote control 59, an instruction other than an instruction concerning the access setting process, the reception control circuit of the reception device 45 recognizes in the instruction content analysis (S62) that another instruction irrelevant to the access setting has been instructed, and performs another process (S69). The other process means adjustment of the quality of images or the like. However, the other process is irrelevant to the present invention and a further description is omitted here.

Although not illustrated, it is possible to previously select thinned data or compressed data, as the configuration of data to be used in the case of the normal format.

Although not illustrated, each transmission device performs a process similar to the remote control response process shown in FIG. 15. Processing of each of the transmission devices and the reception devices is similar to that of the first embodiment, except for processing concerning prevention of occurrence of interference, and therefore a further description is omitted here.

As described above, according to the present embodiment, in a case where the direction of the transmission device as the access target viewed from the reception device is not distinguishable from the direction of the transmission device other than the access target, the communication format is changed from the normal format to the time division format based on an instruction from the remote control. Thus, it is possible to adjust the communication timings so that transmission of image data by the transmission device as the access target is not performed simultaneously with transmission of image data by the transmission device other than the access target, thereby preventing interference from occurring and therefore enabling reliable wireless communication.

### (Third Embodiment)

Next, a third embodiment of the present invention will be described. In the present embodiment, descriptions will be given while taking as an example an image communication system including: a reception device having the function of detecting interference described in the first embodiment and the processing function in accordance with an instruction from a remote control which has been described in the second embodiment; and the remote control described in the second embodiment. In the present embodiment, the remote control performs an access setting, the reception device detects occurrence of interference relating to interference and notifies the remote control thereof, and the remote control instructs the transmission device and the reception device which relate to interference to change a communication format, thereby preventing interference.

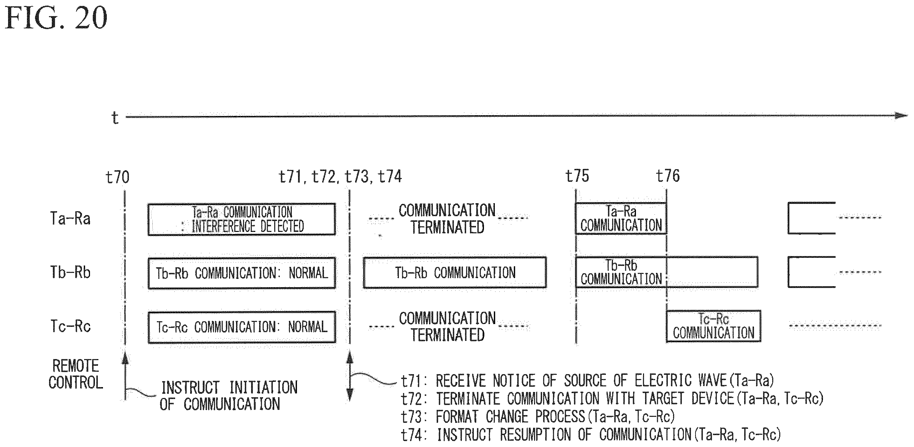

Hereinafter, a description is given with reference to FIG. 20. FIG. 20 illustrates communication timings after communication is initiated. A right direction illustrated represents passage of time. "Ta-Ra" and like illustrated each represents a combination of a transmission device and a reception device. An arrow represents control information transmitted between each device.

For example, in a case where each device of the first embodiment is arranged shown in FIG. 1, and the remote control 59 of the third embodiment is present, the remote control 59 performs access setting with respect to the transmission device 2 (Ta) and the reception device 5 (Ra), the transmission device 8 (Tb) and the reception device 11 (Rb), and the transmission device 14 (Tc) and the reception device 17 (Rc). When data communication is initiated in normal format (t70), interference occurs to the reception device 5. At this time, the reception control circuit 32 of the reception device 5 generates an interference occurrence notice for notifying the remote control 59 of the occurrence of interference, and transmits the interference occurrence notice to the remote control 59.

Upon receiving the interference occurrence notice from the reception device 5, the remote control control circuit 63 of the remote control 59 transmits an communication termination instruction to the reception device 5 transmitting the interference occurrence notice and the transmission device 2 as an access target of the reception device 5. The reception device 5 receiving a communication terminal instruction and the transmission device 2 terminate wireless communication.

Upon receiving an electric wave from the transmission device 14 generating the electric wave causing the interference and thus detecting that the cause of the interference is the transmission device 14, the reception control circuit 32 of the reception device 5 transmits to the remote control 59, an electric wave generation source notice including an ID of the transmission device 14 (t71). Based on the ID of the transmission device 14 included in the electric wave generation source notice, the ID of the reception device 5 transmitting the electric wave generation source notice, and the access relationship recognized in the access relationship specification (S55), the remote control control circuit 63 of the remote control 59 recognizes wireless communication (Ta-Ra) subjected to the interference and wireless communication (Tc-Rc) causing the interference to occur.

The remote control control circuit 63 of the remote control 59 transmits a communication termination instruction to the transmission device 14 and the reception device 17. Then, the remote control control circuit 63 terminates the wireless communication between the reception device 17 and the transmission device 14 causing the interference to occur (t72). Thereafter, to set the communication format for each device to be a format shown in FIG. 17, the remote control control circuit 63 transmits a time division setting request that requests for a change of the communication format to the time division format, to the transmission device 2, the reception device 5, the transmission device 14, and the reception device 17. Each device receiving the time division setting request changes the communication format to the time division format (t73).

Thereafter, the remote control control circuit 63 of the remote control 59 determines an initiation timing of wireless communication by each of the transmission devices and the reception devices so that transmission of image data between the transmission device 2 and the reception device 5 does not overlap transmission of image data between the transmission device 14 and the reception device 17. The remote control control circuit 63 transmits to each of the transmission devices and the reception devices, a communication initiation instruction including information concerning the determined initiation timing, and instruct resumption of communication (t74). The transmission device 2, the reception device 5, the transmission device 14, and the reception device 17, which receive the communication initiation instruction, perform transmission of image data at the timings specified by the communication initiation instruction.

It is assumed in FIG. 20 that processes from reception of the interference occurrence notice (t71) to the instruction communication resumption (t74) are performed in one blank period. After the instruction communication resumption (t74), wireless communication between the transmission device 2 and the reception device 5, and wireless communication between the transmission device 14 and the reception device 17, are resumed after one frame period passes from the time the communication initiation instruction is received, because of the internal processing of the device along with a change of a communication format. As shown in FIG. 20, wireless communication between the transmission device 2 and the reception device 5 is performed from time t75, and wireless communication between the transmission device 14 and the reception device 17 is performed from time t76. Thus, interference is prevented. The communication timings in the image communication system are synchronized similarly to the second embodiment, and synchronization information is transmitted from the remote control 59 to each of the transmission devices and the reception devices in the blank period.

As described above, also in the present embodiment, in a case where the direction of the transmission device as the access target viewed from the reception device is not distinguishable from the direction of the transmission device other than the access target, the communication format is changed from the normal format to the time division format based on an instruction from the remote control. Thus, it is possible to adjust the communication timings so that transmission of image data by the transmission device as the access target is not performed simultaneously with transmission of image data by the transmission device other than the access target, thereby preventing interference from occurring and therefore enabling reliable wireless communication.

Although the embodiments of the present invention have been described above, specific configurations are not limited to the above embodiments, and design modifications and the like made without departing from the scope of the present invention are included.

### INDUSTRIAL APPLICABILITY

The present invention is applicable medical practice, as an operating room, where a plurality of image output devices (endoscopic device or the like) and image data display devices (monitors) are installed.

### DESCRIPTION OF REFERENCE NUMERALS

1, 13, 7, 41, 47, 53: image sensor
2, 8, 14, 42, 48, 54: transmission device
5, 11, 17, 45, 51, 57: reception device
6, 12, 18, 46, 52, 52, 58: monitor
3, 4, 9, 10, 15, 16, 43, 44, 49, 50, 55, 56, 60: antenna (directional antenna)
24, 29, 61: high frequency circuit
23, 30, 62: baseband circuit
22, 31: image processing circuit
32: reception control circuit (measuring unit, changing unit, determining unit, control unit)
28, 35: phase control circuit
26, 34, 65: operation switch
27, 33, 66: LED (warning unit)
25: transmission control circuit
59: remote control (setting device)
63: remote control circuit (receiving unit, determining unit, transmitting unit)
64: storing unit
67: touch panel
68: LCD display circuit
69: LCD panel

## Claims

1. A wireless communication device (4-6),
wherein among a plurality of communication formats to be used to transmit data with a predetermined period, a communication format that requires equal to or greater than half the period to transmit data is defined as a normal format, and a communication format that requires smaller than the half the period to transmit data is defined as a time division format,
wherein a wireless communication device to be accessed for data communication is defined as a target device, and a wireless communication device different from the target device is defined as a non-target device,
wherein the wireless communication device (4-6) comprises:
a directional antenna (4) configured to wirelessly transmit and receive data;
a measuring unit (35) configured to control a directional direction of the directional antenna (4) to measure states of electric waves around the wireless communication device (4-6);
a determining unit (32) configured to determine, based on the result of measurement of the states of the electric waves, whether or not a direction of the target device (1-3) is distinguishable from a direction of the non-target device (13-15); and
a control unit (32) configured to, in a case that the direction of the target device (1-3) is indistinguishable from the direction of the non-target device (13-15), perform control to transmit, via the directional antenna to the target device (1-3) and the non-target device (13-15), notice information to be used to set the communication format to be the time division format; and
a changing unit (32) configured to, in a case that the notice information is transmitted or received, change a communication format of the wireless communication device (4-6) from the normal format to the time division format.

2. The wireless communication device (4-6) according to claim 1, wherein the control unit (32) is configured, in a case that the communication format of the wireless communication device (4-6) is changed from the normal format to the time division format, to receive instruction information that indicates an instruction to initiate data communication, and perform control to initiate reception of data from the target device (1-3).

3. The wireless communication device (4-6) according to claim 1, further comprising:
a warning unit (33) configured to perform warning in a case that the communication format is changed from the normal format to the time division format.

4. A wireless communication system (1-6, 13-15),
wherein among a plurality of communication formats to be used to transmit data with a predetermined period, a communication format that requires equal to or greater than half the period to transmit data is defined as a normal format, and a communication format that requires smaller than the half the period to transmit data is defined as a time division format,
wherein a wireless communication device to be accessed for data communication is defined as a target device, and a wireless communication device different from the target device is defined as a non-target device,
wherein the wireless communication system (1-6, 13-15) comprises:
a first wireless communication device (4-6) comprising:
a directional antenna (4) configured to wirelessly receive data from the target device;
a measuring unit (35) configured to control a directional direction of the directional antenna to measure states of electric waves around the first wireless communication device;
a determining unit (32) configured to determine, based on a result of measurement of the states of the electric waves, whether or not a direction of the target device (1-3) is distinguishable from a direction of the non-target device (13-15);
a control unit (32) configured to, in a case that the direction of the target device (1-3) is indistinguishable from the direction of the non-target device (13-15), perform control to transmit, via the directional antenna (4) to the target device (1-3) and the non-target device (13-15), notice information to be used to set the communication format to be the time division format; and
a changing unit (32) configured to, in a case that the notice information is transmitted or received, change a communication format of the wireless communication device (5) from the normal format to the time division format;
a second wireless communication device (1-3) that is the target device configured to, in a case that the notice information is received, change the communication format of the second wireless communication device (1-3) from the normal format to the time division format; and
a third wireless communication device (13-15) that is the non-target device configured to, in a case that the notice information is received, change the communication format of the third wireless communication device (13-15) from the normal format to the time division format.

5. A wireless communication method,
wherein among a plurality of communication formats to be used to transmit data with a predetermined period, a communication format that requires equal to or greater than half the period to transmit data is defined as a normal format, and a communication format that requires smaller than the half the period to transmit data is defined as a time division format,
wherein a wireless communication device to be accessed for data communication is defined as a target device, and a wireless communication device different from the target device is defined as a non-target device,
wherein the wireless communication method comprises steps to be performed by a wireless communication device (4-6) including a directional antenna (4) configured to wirelessly transmit and receive data, the steps comprising:
a measuring step (S10, S20) of controlling a directional direction of the directional antenna, thereby measuring states of electric waves around the wireless communication device;
a determining step (S11, S21, S22) of determining, based on the result of measurement in the measuring step, whether or not a direction of the target device is distinguishable from a direction of the non-target device;
a transmitting step (S13, S23) of, in a case that the direction of the target device is indistinguishable from the direction of the non-target device, transmitting via the directional antenna to the target device and the non-target device, notice information to be used to set the communication format to be the time division format; and
a changing step (S12, S24) of changing a communication format of the wireless communication device from the normal format to the time division format, in a case the notice information is transmitted or received.

6. A program,
wherein among a plurality of communication formats to be used to transmit data with a predetermined period, a communication format that requires equal to or greater than half the period to transmit data is defined as a normal format, and a communication format that requires smaller than the half the period to transmit data is defined as a time division format,
wherein a wireless communication device to be accessed for data communication is defined as a target device, and a wireless communication device different from the target device is defined as a non-target device,
wherein the program has a computer of a wireless communication device including a directional antenna configured to wirelessly transmit and receive data, execute:
a measuring step (S10, S20) of controlling a directional direction of the directional antenna, thereby measuring states of electric waves around the wireless communication device;
a determining step (S11, S21, S22) of determining, based on the result of measurement in the measuring step, whether or not a direction of the target device is distinguishable from a direction of the non-target device;
a transmitting step (S13, S23) of, in a case that the direction of the target device is indistinguishable from the direction of the non-target device, transmitting via the directional antenna to the target device and the non-target device, notice information to be used to set the communication format to be the time division format; and
a changing step (S12, S24) of changing a communication format of the wireless communication device from the normal format to the time division format, in a case the notice information is transmitted or received.

## Patentansprüche

1. Drahtlose Kommunikationsvorrichtung (4-6),
wobei unter einer Mehrzahl von Kommunikationsformaten, die zu nutzen sind, um Daten mit einer vorbestimmten Dauer zu senden, ein Kommunikationsformat, das gleich oder größer sein muss als die Hälfte der Dauer, um Daten zu senden, als ein Normalformat definiert wird, und ein Kommunikationsformat, das kleiner sein muss als die Hälfte der Dauer, um Daten zu senden, als ein Zeitaufteilungsformat definiert wird,
wobei eine drahtlose Kommunikationsvorrichtung, auf die für die Datenkommunikation zuzugreifen ist, als eine Zielvorrichtung definiert wird, und eine drahtlose Kommunikationsvorrichtung, die sich von der Zielvorrichtung unterscheidet, als eine Nichtzielvorrichtung definiert wird,
wobei die drahtlose Kommunikationsvorrichtung (4-6) umfasst:
eine Richtantenne (4), die dazu ausgelegt ist, Daten drahtlos zu senden und zu empfangen;
eine Messeinheit (35), die dazu ausgelegt ist, eine Richtrichtung der Richtantenne (4) zu steuern, um die Zustände der elektrischen Wellen rund um die drahtlose Kommunikationsvorrichtung (4-6) zu messen;
eine Bestimmungseinheit (32), die dazu ausgelegt ist, basierend auf dem Ergebnis der Messung der Zustände der elektrischen Wellen zu bestimmen, ob eine Richtung der Zielvorrichtung (1-3) von einer Richtung der Nichtzielvorrichtung (13-15) unterscheidbar ist oder nicht; und
eine Steuerungseinheit (32), die dazu ausgelegt ist, in einem Fall, in dem die Richtung der Zielvorrichtung (1-3) von der Richtung der Nichtzielvorrichtung (13-15) nicht unterscheidbar ist, Steuerung durchzuführen, um über die Richtantenne Mitteilungsinformation an die Zielvorrichtung (1-3) und die Nichtzielvorrichtung (13-15) zu senden, die zu nutzen ist, um das Kommunikationsformat auf das Zeitaufteilungsformat einzustellen; und
eine Änderungseinheit (32), die dazu ausgelegt ist, in einem Fall, in dem die Mitteilungsinformation gesendet oder empfangen wird, ein Kommunikationsformat der drahtlosen Kommunikationsvorrichtung (4-6) von dem Normalformat auf das Zeitaufteilungsformat zu ändern.

2. Drahtlose Kommunikationsvorrichtung (4-6) nach Anspruch 1, wobei die Steuerungseinheit (32) dazu ausgelegt ist, in einem Fall, in dem das Kommunikationsformat der drahtlosen Kommunikationsvorrichtung (4-6) von dem Normalformat auf das Zeitaufteilungsformat geändert wird, Anweisungsinformation zu empfangen, die eine Anweisung anzeigt, um Datenkommunikation auszulösen, und Steuerung durchzuführen, um den Empfang von Daten von der Zielvorrichtung (1-3) auszulösen.

3. Drahtlose Kommunikationsvorrichtung (4-6) nach Anspruch 1, ferner umfassend:
eine Warneinheit (33), die dazu ausgelegt ist, in einem Fall, in dem das Kommunikationsformat von dem Normalformat auf das Zeitaufteilungsformat geändert wurde, eine Warnung durchzuführen.

4. Drahtloses Kommunikationssystem (1-6, 13-15),
wobei unter einer Mehrzahl von Kommunikationsformaten, die zu nutzen sind, um Daten mit einer vorbestimmten Dauer zu senden, ein Kommunikationsformat, das gleich oder größer sein muss als die Hälfte der Dauer, um Daten zu senden, als ein Normalformat definiert wird, und ein Kommunikationsformat, das kleiner als die Hälfte der Dauer sein muss, um Daten zu senden, als ein Zeitaufteilungsformat definiert wird,
wobei eine drahtlose Kommunikationsvorrichtung, auf die für die Datenkommunikation zuzugreifen ist, als eine Zielvorrichtung definiert wird, und eine drahtlose Kommunikationsvorrichtung, die sich von der Zielvorrichtung unterscheidet, als eine Nichtzielvorrichtung definiert wird,
wobei das drahtlose Kommunikationssystem (1-6, 13-15) umfasst:
eine erste drahtlose Kommunikationsvorrichtung (4, -6), umfassend:
eine Richtantenne (4), die dazu ausgelegt ist, Daten von der Zielvorrichtung drahtlos zu empfangen;
eine Messeinheit (35), die dazu ausgelegt ist, eine Richtrichtung der Richtantenne zu steuern, um die Zustände der elektrischen Wellen rund um die erste drahtlose Kommunikationsvorrichtung zu messen;
eine Bestimmungseinheit (32), die dazu ausgelegt ist, basierend auf einem Ergebnis der Messung der Zustände der elektrischen Wellen zu bestimmen, ob eine Richtung der Zielvorrichtung (1-3) von einer Richtung der Nichtzielvorrichtung (13-15) unterscheidbar ist oder nicht;
eine Steuerungseinheit (32), die dazu ausgelegt ist, in einem Fall, in dem die Richtung der Zielvorrichtung (1-3) von der Richtung der Nichtzielvorrichtung (13-15) nicht unterscheidbar ist, Steuerung durchzuführen, um über die Richtantenne (4) Mitteilungsinformation an die Zielvorrichtung (1-3) und die Nichtzielvorrichtung (13-15) zu senden, die zu nutzen ist, um das Kommunikationsformat auf das Zeitaufteilungsformat einzustellen; und
eine Änderungseinheit (32), die dazu ausgelegt ist, in einem Fall, in dem die Mitteilungsinformation gesendet oder empfangen wird, ein Kommunikationsformat der drahtlosen Kommunikationsvorrichtung (5) von dem Normalformat auf das Zeitaufteilungsformat zu ändern;
eine zweite drahtlose Kommunikationsvorrichtung (1-3), die die Zielvorrichtung ist, die dazu ausgelegt ist, in einem Fall, in dem die Mitteilungsinformation empfangen wird, das Kommunikationsformat der zweiten drahtlosen Kommunikationsvorrichtung (1-3) von dem Normalformat auf das Zeitaufteilungsformat zu ändern; und
eine dritte drahtlose Kommunikationsvorrichtung (13-15), die die Nichtzielvorrichtung ist, die dazu ausgelegt ist, in einem Fall, in dem die Mitteilungsinformation empfangen wird, das Kommunikationsformat der dritten drahtlosen Kommunikationsvorrichtung (13-15) von dem Normalformat auf das Zeitaufteilungsformat zu ändern.

5. Drahtloses Kommunikationsverfahren,
wobei unter einer Mehrzahl von Kommunikationsformaten, die zu nutzen sind, um Daten mit einer vorbestimmten Dauer zu senden, ein Kommunikationsformat, das gleich oder größer sein muss als die Hälfte der Dauer, um Daten zu senden, als ein Normalformat definiert wird, und ein Kommunikationsformat, das kleiner als die Hälfte der Dauer sein muss, um Daten zu senden, als ein Zeitaufteilungsformat definiert wird,
wobei eine drahtlose Kommunikationsvorrichtung, auf die zur Datenkommunikation zuzugreifen ist, als eine Zielvorrichtung definiert wird, und eine drahtlose Kommunikationsvorrichtung, die sich von der Zielvorrichtung unterscheidet, als eine Nichtzielvorrichtung definiert wird,
wobei das drahtlose Kommunikationsverfahren Schritte umfasst, die von einer drahtlosen Kommunikationsvorrichtung (4-6) durchzuführen sind, die eine Richtantenne (4) umfasst, die dazu ausgelegt ist, Daten drahtlos zu senden und zu empfangen, wobei die Schritte umfassen:
einen Messschritt (S10, S20) zum Steuern einer Richtrichtung der Richtantenne, wodurch die Zustände der elektrischen Wellen rund um die erste drahtlose Kommunikationsvorrichtung gemessen werden;
einen Bestimmungsschritt (S11, S21, S22) zum Bestimmen, basierend auf dem Ergebnis der Messung in dem Messschritt, ob eine Richtung der Zielvorrichtung von einer Richtung der Nichtzielvorrichtung unterscheidbar ist oder nicht;
einen Sendeschritt (S13, S23) zum Senden, in einem Fall, in dem die Richtung der Zielvorrichtung von der Richtung der Nichtzielvorrichtung nicht unterscheidbar ist, über die Richtantenne an die Zielvorrichtung und die Nichtzielvorrichtung, einer Mitteilungsinformation, die zu nutzen ist, um das Kommunikationsformat auf das Zeitaufteilungsformat einzustellen; und
einen Änderungsschritt (S12, S24) zum Ändern eines Kommunikationsformats der drahtlosen Kommunikationsvorrichtung von dem Normalformat auf das Zeitaufteilungsformat in einem Fall, in dem die Mitteilungsinformation gesendet oder empfangen wird.

6. Programm,
wobei unter einer Mehrzahl von Kommunikationsformaten, die zu nutzen sind, um Daten mit einer vorbestimmten Dauer zu senden, ein Kommunikationsformat, das gleich oder größer sein muss als die Hälfte der Dauer, um Daten zu senden, als ein Normalformat definiert wird, und ein Kommunikationsformat, das kleiner als die Hälfte der Dauer sein muss, um Daten zu senden, als ein Zeitaufteilungsformat definiert wird,
wobei eine drahtlose Kommunikationsvorrichtung, auf die zur Datenkommunikation zuzugreifen ist, als eine Zielvorrichtung definiert wird, und eine drahtlose Kommunikationsvorrichtung, die sich von der Zielvorrichtung unterscheidet, als eine Nichtzielvorrichtung definiert wird,
wobei das Programm einen Computer einer drahtlosen Kommunikationsvorrichtung aufweist, die eine Richtantenne umfasst, die dazu ausgelegt ist, Daten drahtlos zu senden und zu empfangen, und ausführt:
einen Messschritt (S10, S20) zum Steuern einer Richtrichtung der Richtantenne, wodurch die Zustände der elektrischen Wellen rund um die erste drahtlose Kommunikationsvorrichtung gemessen werden;
einen Bestimmungsschritt (S11, S21) zum Bestimmen, basierend auf dem Ergebnis der Messung der Zustände der elektrischen Wellen, ob eine Richtung der Zielvorrichtung von einer Richtung der Nichtzielvorrichtung unterscheidbar ist;
einen Sendeschritt (S13, S23) zum, in einem Fall, in dem die Richtung der Zielvorrichtung von der Richtung der Nichtzielvorrichtung nicht unterscheidbar ist, Senden einer Mitteilungsinformation, die zu nutzen ist, um das Kommunikationsformat auf das Zeitaufteilungsformat einzustellen, über die Richtantenne an die Zielvorrichtung und die Nichtzielvorrichtung; und
einen Änderungsschritt (S12, S24) zum Ändern eines Kommunikationsformats der drahtlosen Kommunikationsvorrichtung von dem Normalformat auf das Zeitaufteilungsformat in einem Fall, in dem die Mitteilungsinformation gesendet oder empfangen wird.

## Revendications

1. Dispositif de communication sans fil (4-6),
dans lequel parmi une pluralité de formats de communication à utiliser pour transmettre des données avec une période prédéterminée, un format de communication qui requiert la moitié ou plus de la moitié de la période pour transmettre des données est défini comme un format normal, et un format de communication qui requiert moins de la moitié de la période pour transmettre des données est défini comme un format de répartition temporelle,
un dispositif de communication sans fil auquel on doit accéder pour une communication de données étant défini comme un dispositif cible, et un dispositif de communication sans fil différent du dispositif cible étant défini comme un dispositif non-cible,
le dispositif de communication sans fil (4-6) comprenant :
une antenne directionnelle (4) configurée pour transmettre et recevoir des données de manière sans fil ;
une unité de mesure (35) configurée pour commander une direction directionnelle de l'antenne directionnelle (4) pour mesurer des états d'ondes électriques autour du dispositif de communication sans fil (4-6) ;
une unité de détermination (32) configurée pour déterminer, sur la base du résultat de mesure des états des ondes électriques, si ou non une direction du dispositif cible (1-3) peut être distinguée d'une direction du dispositif non-cible (13-15) ; et
une unité de commande (32) configurée pour, dans un cas où la direction du dispositif cible (1-3) ne peut pas être distinguée de la direction du dispositif non-cible (13-15), réaliser une commande pour transmettre, par l'intermédiaire de l'antenne directionnelle, au dispositif cible (1-3) et au dispositif non-cible (13-15), des informations de notification à utiliser pour définir le format de communication pour être le format de répartition temporelle ; et
une unité de changement (32) configurée pour, dans un cas où les informations de notification sont transmises ou reçues, changer un format de communication du dispositif de communication sans fil (4-6) du format normal au format de répartition temporelle.

2. Dispositif de communication sans fil (4-6) selon la revendication 1, dans lequel l'unité de commande (32) est configurée, dans un cas où le format de communication du dispositif de communication sans fil (4-6) est changé du format normal au format de répartition temporelle, pour recevoir des informations d'instruction qui indiquent une instruction d'initier la communication de données et réaliser une commande pour initier la réception de données à partir du dispositif cible (1-3).

3. Dispositif de communication sans fil (4-6) selon la revendication 1, comprenant en outre :
une unité d'avertissement (33) configurée pour réaliser un avertissement dans un cas où le format de communication est changé du format normal au format de répartition temporelle.

4. Système de communication sans fil (1-6, 13-15),
dans lequel parmi une pluralité de formats de communication à utiliser pour transmettre des données avec une période prédéterminée, un format de communication qui requiert la moitié ou plus de la moitié de la période pour transmettre des données est défini comme un format normal, et un format de communication qui requiert moins de la moitié de la période de transmission de données est défini comme un format de répartition temporelle,
un dispositif de communication sans fil auquel on doit accéder pour une communication de données étant défini comme un dispositif cible, et un dispositif de communication sans fil différent du dispositif cible étant défini comme un dispositif non-cible,
le système de communication sans fil (1-6, 13-15) comprenant :
un premier dispositif de communication sans fil (4-6) comprenant :
une antenne directionnelle (4) configurée pour recevoir des données de manière sans fil à partir du dispositif cible ;
une unité de mesure (35) configurée pour commander une direction directionnelle de l'antenne directionnelle pour mesurer des états d'ondes électriques autour du premier dispositif de communication sans fil ;
une unité de détermination (32) configurée pour déterminer, sur la base d'un résultat de mesure des états des ondes électriques, si ou non une direction du dispositif cible (1-3) peut être distinguée d'une direction du dispositif non-cible (13-15) ou non ; une unité de commande (32) configurée pour, dans un cas où la direction du dispositif cible (1-3) ne peut pas être distinguée de la direction du dispositif non-cible (13-15), réaliser une commande pour transmettre, par l'intermédiaire de l'antenne directionnelle (4), au dispositif cible (1-3) et au dispositif non-cible (13-15), des informations de notification à utiliser pour définir le format de communication pour être le format de répartition temporelle ; et
une unité de changement (32) configurée pour, dans un cas où les informations de notification sont transmises ou reçues, changer un format de communication du dispositif de communication sans fil (5) du format normal au format de répartition temporelle ;
un deuxième dispositif de communication sans fil (1-3) qui est le dispositif cible configuré pour, dans un cas où les informations de notification sont reçues, changer le format de communication du deuxième dispositif de communication sans fil (1-3) du format normal au format de répartition temporelle ; et
un troisième dispositif de communication sans fil (13-15) qui est le dispositif non-cible configuré pour, dans un cas où les informations de notification sont reçues, changer le format de communication du troisième dispositif de communication sans fil (13-15) du format normal au format de répartition temporelle.

5. Procédé de communication sans fil,
dans lequel parmi une pluralité de formats de communication à utiliser pour transmettre des données avec une période prédéterminée, un format de communication qui requiert la moitié ou plus de la moitié de la période pour transmettre des données est défini comme un format normal, et un format de communication qui requiert moins de la moitié de la période de transmission de données est défini comme un format de répartition temporelle,
un dispositif de communication sans fil auquel on doit accéder pour une communication de données étant défini comme un dispositif cible, et un dispositif de communication sans fil différent du dispositif cible étant défini comme un dispositif non-cible,
le procédé de communication sans fil comprenant des étapes à réaliser par un dispositif de communication sans fil (4-6) comprenant une antenne directionnelle (4) configurée pour transmettre et recevoir des données de manière sans fil, les étapes comprenant :
une étape de mesure (S10, S20) pour commander une direction directionnelle de l'antenne directionnelle, mesurant ainsi des états d'ondes électriques autour du dispositif de communication sans fil ;
une étape de détermination (S11, S21, S22) pour déterminer, sur la base du résultat de mesure dans l'étape de mesure, si ou non une direction du dispositif cible peut être distinguée d'une direction du dispositif non-cible ;
une étape de transmission (S13, S23) pour, dans un cas où la direction du dispositif cible ne peut pas être distinguée de la direction du dispositif non-cible, transmettre, par l'intermédiaire de l'antenne directionnelle, au dispositif cible et au dispositif non-cible, des informations de notification à utiliser pour définir le format de communication pour être le format de répartition temporelle ; et
une étape de changement (S12, S14) pour changer un format de communication du dispositif de communication sans fil du format normal au format de répartition temporelle, dans le cas où les informations de notification sont transmises ou reçues.

6. Programme,
dans lequel parmi une pluralité de formats de communication à utiliser pour transmettre des données avec une période prédéterminée, un format de communication qui requiert la moitié ou plus de la moitié de la période pour transmettre des données est défini comme un format normal, et un format de communication qui requiert moins de la moitié de la période pour transmettre des données est défini comme un format de répartition temporelle,
un dispositif de communication sans fil auquel on doit accéder pour une communication de données étant défini comme un dispositif cible, et un dispositif de communication sans fil différent du dispositif cible étant défini comme un dispositif non-cible,
le programme ayant un ordinateur d'un dispositif de communication sans fil comprenant une antenne directionnelle configurée pour transmettre et recevoir des données de manière sans fil, et exécuter :
une étape de mesure (S10, S20) pour commander une direction directionnelle de l'antenne directionnelle, mesurant ainsi des états d'ondes électriques autour du dispositif de communication sans fil ;
une étape de détermination (S11, S21, S22) pour déterminer, sur la base du résultat de mesure dans l'étape de mesure, si ou non une direction du dispositif cible peut être distinguée d'une direction du dispositif non-cible ;
une étape de transmission (S13, S23) pour, dans un cas où la direction du dispositif cible ne peut pas être distinguée de la direction du dispositif non-cible, transmettre, par l'intermédiaire de l'antenne directionnelle, au dispositif cible et au dispositif non-cible, des informations de notification à utiliser pour définir le format de communication pour être le format de répartition temporelle ; et
une étape de changement (S12, S14) pour changer un format de communication du dispositif de communication sans fil du format normal au format de répartition temporelle, dans un cas où les informations de notification sont transmises ou reçues.
